(19) Europäisches Patentamt
European Patent Office
Office européen des brevets

(11) EP 4 410 542 A1

(12) EUROPEAN PATENT APPLICATION
published in accordance with Art. 153(4) EPC

(43) Date of publication:
**07.08.2024 Bulletin 2024/32**

(21) Application number: **22875900.7**

(22) Date of filing: **16.09.2022**

(51) International Patent Classification (IPC):
***B32B 23/08*** (2006.01) ***C08J 7/04*** (2020.01)

(52) Cooperative Patent Classification (CPC):
**B32B 23/08; C08J 7/04**

(86) International application number:
**PCT/JP2022/034797**

(87) International publication number:
**WO 2023/054029 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021160404**

(71) Applicant: **FUJIFILM Corporation**
**Tokyo 106-8620 (JP)**

(72) Inventors:
- **SUZUKI, Takato**
  **Minamiashigara-shi, Kanagawa 250-0193 (JP)**
- **HARA, Miyoko**
  **Minamiashigara-shi, Kanagawa 250-0193 (JP)**
- **SASADA, Yasuyuki**
  **Minamiashigara-shi, Kanagawa 250-0193 (JP)**

(74) Representative: **HGF**
**HGF Limited**
**1 City Walk**
**Leeds LS11 9DX (GB)**

(54) **COVER FILM**

(57) The present invention provides a cover film having excellent storage stability. The cover film of the present invention includes a cellulose acetate support and a polymer layer containing a polymer, in which the support contains an additive A other than cellulose acetate, and in a case where the support contains one kind of the additive A, a molecular weight of the one kind of the additive A is 500 or more, and in a case where the support contains two or more kinds of the additives A, an average molecular weight of the two or more kinds of the additives A is 500 or more.



Processed by Luminess, 75001 PARIS (FR)

## Description

### BACKGROUND OF THE INVENTION

1. Field of the Invention

The present invention relates to a cover film.

2. Description of the Related Art

In a medical field, a method of observing a specimen for microscopic observation with a microscope has been known in cytodiagnosis, histopathology, and the like. Examples of a method of preparing the specimen for microscopic observation include a method of automatically overlapping a substrate on which a test subject is placed with a cover film using an automatic enclosing device to adhere (hereinafter, also referred to as "enclose") the cover film and the substrate, the cover film having a polymer (for example, an adhesive, a compound which can be used as the adhesive, or the like) on a support in advance, the substrate being a substrate (for example, a glass slide or the like) onto which few drops of a solvent capable of swelling and/or dissolving the adhesive (hereinafter, also referred to as "enclosing solution"; for example, xylene or the like) is dropped. According to this method, it is possible to produce a specimen for microscopic observation, in which the test subject is fixed between the substrate and the cover film.

For example, JP2008-003506A discloses a cover film for a microscope, which includes a transparent support containing a predetermined amount of a plasticizer.

### SUMMARY OF THE INVENTION

In a case where a bonded body obtained by bonding the substrate and the cover film is stored for a long period of time, it is required that the cover film is unlikely to be peeled off from the substrate. Hereinafter, the fact that the cover film is unlikely to be peeled off from the substrate during the storage for a long period of time is also referred to as excellent storage stability.

As a result of studying the cover film disclosed in JP2008-003506A or the like, the present inventors have found that the storage stability is deteriorated.

Therefore, an object of the present invention is to provide a cover film having excellent storage stability.

As a result of conducting intensive studies to achieve the object, the present inventor has found that the object is achieved by the following constitutions.

[1] A cover film comprising:

a cellulose acetate support; and
a polymer layer containing a polymer,
in which the support contains an additive A other than cellulose acetate, and
in a case where the support contains one kind of the additive A, a molecular weight of the one kind of the additive A is 500 or more, and in a case where the support contains two or more kinds of the additives A, an average molecular weight of the two or more kinds of the additives A is 500 or more.

[2] The cover film according to [1],
in which the additive A includes one or more selected from the group consisting of saccharides and polyester.
[3] The cover film according to [1] or [2],
in which the polymer layer contains an additive B of a kind different from the polymer.
[4] The cover film according to [3],
in which a relationship of Expression (X) is satisfied.
[5] The cover film according to [3] or [4],
in which the additive B includes one or more selected from the group consisting of a carboxylic acid ester, a phosphoric acid ester, a glycol compound, and a deep eutectic solvent.
[6] The cover film according to any one of [3] to [5],
in which the additive B includes one or more selected from the group consisting of phthalic acid ester, trimellitic acid ester, pyromellitic acid ester, citric acid ester, dipentaerythritol ester, a carboxylic acid ester having an epoxy group, and polyether ester.
[7] The cover film according to any one of [3] to [6],
in which the additive B includes phthalic acid ester.

[8] The cover film according to any one of [3] to [7],
in which a relationship of Expression (Y) is satisfied.

According to the present invention, it is possible to provide a cover film having excellent storage stability.

## DESCRIPTION OF THE PREFERRED EMBODIMENTS

Hereinafter, the present invention will be described in detail.
The description of the configuration requirements described below is made on the basis of representative embodiments of the present invention, but it should not be construed that the present invention is limited to those embodiments.
Hereinafter, the meaning of each description in the present specification will be described.
Any numerical range expressed using "to" in the present specification refers to a range including the numerical values before and after the "to" as a lower limit value and an upper limit value, respectively. In a range of numerical values described in stages in the present specification, the upper limit value or the lower limit value described in a certain range of numerical values may be replaced with an upper limit value or a lower limit value of the range of numerical values described in other stages. In addition, regarding the numerical range described in the present specification, an upper limit value or a lower limit value described in a numerical value may be replaced with a value described in Examples.
In the present specification, a combination of two or more preferred aspects is a more preferred aspect.
In the present specification, in a case where a plurality of substances corresponding to each component in a composition is present, the amount of each component in the composition or in the layer means the total amount of the plurality of substances present in the composition, unless otherwise specified.
In the present specification, "(meth)acryl" is a generic term encompassing acryl and methacryl, and means "one or more of acryl and methacryl". Similarly, "(meth)acrylate" means "one or more of acrylate and methacrylate".
In the present specification, unless specified otherwise, a refractive index refers to a value which is measured using NAR-2T manufactured by Atago Co., Ltd. with respect to light having a wavelength of 550 nm.
In the present specification, a weight-average molecular weight (Mw) and a number-average molecular weight (Mn) are molecular weights in terms of polystyrene used as a standard substance, which are detected by using a solvent tetrahydrofuran (THF), a differential refractometer, and a gel permeation chromatography (GPC) analyzer using TSKgel GMHxL, TSKgel G4000HxL, TSKgel G2000HxL, and/or TSKgel Super HZM-N (all trade names manufactured by Tosoh Corporation) as columns, unless otherwise specified.

<Cover film>

The cover film according to the embodiment of the present invention includes a cellulose acetate support (hereinafter, also referred to as "AC support") and a polymer layer containing a polymer,

in which the support contains an additive A other than cellulose acetate, and
in a case where the support contains one kind of the additive A, a molecular weight of the one kind of the additive A is 500 or more, and
in a case where the support contains two or more kinds of the additives A, an average molecular weight of the two or more kinds of the additives A is 500 or more.

The mechanism by which the cover film according to the embodiment of the present invention has excellent storage stability is not always clear, but the present inventors have presumed as follows.
Examples of the feature point of the cover film according to the embodiment of the present invention include a point that the cover film contains the additive A. In a case where an additive having a molecular weight or an average molecular weight of less than 500, which is contained in the support of the cover film in the related art, is used, the additive has a relatively low molecular weight and is likely to move (diffuse) a layer constituting the cover film. Therefore, in a case of long-term storage, it is presumed that the above-described additive gradually moves from the AC support to an interface between the polymer layer and the substrate (for example, a glass slide or the like), and as a result, peeling occurs between the polymer layer and the substrate.
On the other hand, in a case where one kind of the additive A is contained and a molecular weight of the one kind of the additive A is 500 or more, the above-described moving is suppressed, and thus it is presumed that the storage stability is excellent. In addition, in a case where two or more kinds of the additives A are contained, the storage stability is excellent in a case where an average molecular weight of the two or more kinds of the additives A is 500 or more. Even in a case where an additive having a molecular weight of less than 500 is contained among the two or more kinds of the additives A, the storage stability is excellent in a case where the above-described average molecular weight is

500 or more.

Hereinafter, the configuration of the cover film will be described.

[AC support]

The cover film includes an AC support.

The AC support is a support containing cellulose acetate as a main component. The "main component" means a component having the highest content among components contained in the AC support, and it is preferably a component contained in an amount of more than 50% by mass and more preferably a component contained in an amount of 80% by mass or more with respect to the total mass of the AC support. The upper limit thereof is preferably 100% by mass or less with respect to the total mass of the AC support.

(Material of AC support)

The AC support is not particularly limited, and a known material of the AC support can be used.

Examples of cellulose acetate include cellulose-based polymers such as cellulose triacetate (TAC), cellulose diacetate, and cellulose monoacetate, and cellulose triacetate is preferable.

A degree of substitution of the cellulose acetate is preferably 2.00 to 3.00, more preferably 2.40 to 2.95, and still more preferably 2.85 to 2.95.

Examples of a method of measuring the above-described degree of substitution include known measuring methods such as an FT-IR method and a titration method.

(Properties of AC support)

- Thickness -

A thickness of the AC support is not particularly limited, but is preferably in a range of 50 to 250 μm, more preferably in a range of 50 to 150 μm, and still more preferably in a range of 100 to 150 μm.

- Refractive index -

A refractive index of the AC support is not particularly limited, and may be, for example, 1.440 to 1.600. From the viewpoint of microscopic properties, the refractive index of the AC support is preferably 1.460 to 1.560 that is close to that of the glass slide (refractive index: 1.52 to 1.56).

On the surface of the AC support, an undercoat layer which is known in the field of photosensitive materials may be provided. A surface treatment such as ultraviolet irradiation, corona discharge, or glow discharge may be performed on the AC support.

Examples of the AC support include supports described in paragraphs [0016] to [0023] of JP2015-227955A, the content of which is incorporated herein by reference.

(Additive A)

The cover film contains the additive A other than cellulose acetate.

In other words, the additive A does not include cellulose acetate which is the main component of the AC support. The additive A may be the same or different from an additive B described later, and it is preferable that the additive A is different from the additive B.

In a case where one kind of the additive A is contained, a molecular weight of the one kind of the additive A is 500 or more, preferably 700 or more and more preferably 800 or more. The upper limit thereof is preferably 5,000 or less and more preferably 1,000 or less.

In a case where two or more kinds of the additives A are contained, an average molecular weight of the two or more kinds of the additives A is 500 or more, preferably 700 or more and more preferably 800 or more. The upper limit thereof is preferably 5,000 or less and more preferably 1,000 or less.

For example, in a case where the AC support contains one kind of the additive A, the molecular weight of the one kind of the additive A is 500 or more, and the additive A does not include one kind of additive having a molecular weight of less than 500. That is, in a case where the one kind of the additive A is contained, the molecular weight of the additive A is limited to 500 or more.

The average molecular weight of the additives A is a weighted average value of molecular weights, and is calculated by totaling values obtained by multiplying the molecular weight of each of the two or more kinds of the additives

A by the content of each of the two or more kinds of the additives A with respect to the total mass of the additives A.

More specifically, the average molecular weight of the additives A is a value (X) obtained by Expression 1.

Specifically, in Expression 1, the average molecular weight of the additives A is calculated by substituting a molecular weight of an i-th (i represents an integer of 1 or more) additive A contained in the AC support into Mi and substituting a mass ratio (content) of the i-th additive A to the total mass of the additives A into Wi.

$$\text{Expression 1} \qquad X = \Sigma MiWi/\Sigma Wi$$

Specifically, in a case where the additive A includes an additive A-X (M1 is a number-average molecular weight of 900) as a first additive and an additive A-Y (M2 is a molecular weight of 400) as a second additive, and a content (W1) of the additive A-X with respect to the total mass of the additives A is 0.8 and a content (W2) of the additive A-Y with respect to the total mass of the additives A is 0.2, the above-described average molecular weight (X) is calculated as "800" from "$(900 \times 0.8 + 400 \times 0.2)/(0.8 + 0.2) = 800$". The above-described total mass of the additives A corresponds to the total mass of the additive A-X and the additive A-Y.

As described above, in a case where the AC support contains two or more kinds of the additives A, an additive A having a molecular weight of less than 500 may be contained as long as the above-described average molecular weight is 500 or more.

In a case where two or more kinds of the above-described additives A are contained, it is preferable that molecular weights of all the additives A are 500 or more.

In a case where the additive A has a molecular weight distribution, the above-described molecular weight represents a number-average molecular weight, and the above-described average molecular weight is calculated using the number-average molecular weight.

It is preferable that the additive A includes one or more selected from the group consisting of saccharides and polyester.

- Saccharides -

Examples of the saccharides include monosaccharides, disaccharides, and polysaccharides, and disaccharides are preferable.

Examples of the monosaccharides include pentose such as ribose, deoxyribose, arabinose, and xylose; triose, tetrose, hexose, and heptose.

Examples of the disaccharides include sucrose, lactose, maltose, trehalose, turanose, and cellobiose, and sucrose is preferable.

Examples of the polysaccharides include glycogen and starch.

The above-described saccharides may be chain-like or cyclic. Examples of the above-described cyclic saccharides include a furanose ring and a pyranose ring.

Some or all of hydroxyl groups included in the saccharides may have a substituent in which a hydrogen atom of the hydroxyl group is replaced with the substituent. In a case where a hydroxyl group in the plurality of hydroxyl groups is replaced with substituents, the plurality of substituents may be the same or different from each other.

The above-described substituent is preferably an acyl group. The number of carbon atoms in the above-described acyl group is preferably 1 to 10.

Examples of the above-described acyl group include aliphatic acyl groups such as a formyl group, an acetyl group, a propionyl group, a 2-methylpropionyl group, a 2,2-dimethylpropionyl group, and a 2-ethylhexanoyl group; and aromatic acyl groups such as a benzoyl group, a 1-naphthylcarbonyl group, a 2-naphthylcarbonyl group, and a 2-furylcarbonyl group.

- Polyester -

Examples of the additive A include polyester.

As the polyester, a polyester including a repeating unit represented by General Formula (1A) and having a sealed terminal is preferable.

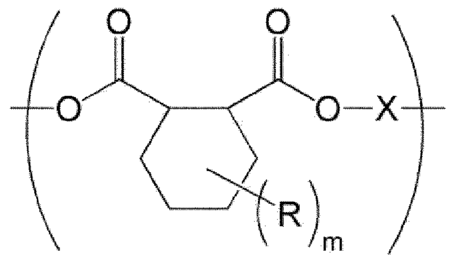

(1 A)

In General Formula (1A), X represents a non-cyclic divalent linking group having 2 to 10 carbon atoms. R represents an alkyl group having 1 to 8 carbon atoms, an alkenyl group having 2 to 8 carbon atoms, an alkynyl group having 2 to 8 carbon atoms, or an aryl group having 6 carbon atoms. m represents an integer of 0 to 4.

X represents a non-cyclic divalent linking group having 2 to 10 carbon atoms.

X is preferably a non-cyclic divalent linking group having 2 to 6 carbon atoms and more preferably a non-cyclic divalent linking group having 2 to 4 carbon atoms.

Examples of the non-cyclic divalent linking group having 2 to 10 carbon atoms include an alkylene group (preferably having 2 to 10 carbon atoms, more preferably having 2 to 6 carbon atoms, and still more preferably having 2 to 4 carbon atoms), an alkynylene group (preferably having 2 to 10 carbon atoms, more preferably having 2 to 6 carbon atoms, and still more preferably having 2 to 4 carbon atoms), and the above-described alkylene group and the above-described alkynylene group, each of which has a heteroatom (for example, an oxygen atom or a nitrogen atom).

The non-cyclic divalent linking group having 2 to 10 carbon atoms may have a substituent.

Examples of the substituent include an alkyl group, an alkoxy group, a hydroxyl group, a carboxyl group, and a group formed by a combination thereof. The term "non-cyclic" means that the group does not include a cyclic structure. Examples of the group not including a cyclic structure include a linear or branched group.

R represents an alkyl group having 1 to 8 carbon atoms, an alkenyl group having 2 to 8 carbon atoms, an alkynyl group having 2 to 8 carbon atoms, or an aryl group having 6 carbon atoms.

Examples of the alkyl group having 1 to 8 carbon atoms include a methyl group, an ethyl group, a propyl group, a butyl group, an isobutyl group, a pentyl group, a hexyl group, an octyl group, and a 2-ethylhexyl group, and an alkyl group having 1 to 4 is preferable and a methyl group or an ethyl group is more preferable.

Examples of the alkenyl group having 2 to 8 carbon atoms include an ethenyl group, a 1-methylethenyl group, a 1-propenyl group, a 2-propenyl group, a 2-methyl-1-propenyl group, a 2-methyl-2-propenyl group, and a 2-methylenebutyl group.

Examples of the alkynyl group having 2 to 8 carbon atoms include an ethynyl group, a 1-methylethynyl group, a 1-propyne group, a 2-propyne group, a 2-methyl-1-propyne group, a 2-methyl-2-propyne group, and a 2-methylenebutyne group.

Examples of the aryl group having 6 carbon atoms include a phenyl group and a 4-methylphenyl group.

The group represented by R may have a substituent. Examples of the above-described substituent include the substituents that can be included in X.

The number of carbon atoms in the group represented by R does not include the number of carbon atoms in the substituent that can be included in the group represented by R. Specifically, the aryl group having 6 carbon atoms includes a phenyl group and a 4-methylphenyl group.

R may form a ring structure. Examples of the above-described ring structure include a cyclohexyl group, a cyclooctyl group, a boronyl group, an isoboronyl group, and a norbornyl group.

m represents an integer of 0 to 4.

m is preferably an integer of 1 to 4, more preferably an integer of 1 or 2, and still more preferably 1 from the viewpoint of reactivity and supply of the raw material.

The polyester having a sealed terminal preferably has a terminal structure obtained by reacting a terminal of the polyester with a monohydric alcohol (or a derivative of the monohydric alcohol, which is a compound capable of forming an ester bond with a carboxy group of the terminal of the polyester) or a monocarboxylic acid (or a derivative of the monocarboxylic acid, which is a compound capable of forming an ester bond with a hydroxyl group of the terminal of the polyester). For example, in a case where a dicarboxylic acid and a diol are reacted to obtain a polyester having a carboxy group at the terminal, the terminal can be sealed with a monohydric alcohol residue by reacting the polyester with a monohydric alcohol.

In addition, in a case where a polyester having a hydroxyl group at the terminal is obtained, the terminal can be sealed with a monocarboxylic acid residue by reacting the ester oligomer with a monocarboxylic acid. The residue represents a partial structure of the above-described polyester, which has characteristics of a monomer forming the

above-described polyester. For example, a monocarboxylic acid residue formed from a monocarboxylic acid R-COOH is R-CO-, and a monohydric alcohol residue formed from a monohydric alcohol R-OH is R-O-.

It is preferable that the terminal of the above-described polyester is sealed with an acyl group, and it is more preferable to have a terminal structure obtained by reacting with a monocarboxylic acid. In this case, the terminal structure sealed with an acyl group may be a terminal structure in which a hydrogen atom of the hydroxyl group is substituted with an acyl group derived from a linear or branched aliphatic monocarboxylic acid (meaning a monocarboxylic acid having no alicyclic structure, and preferably also having no aromatic ring and no heterocyclic ring as a substituent), or a terminal structure in which a hydrogen atom of the hydroxyl group is substituted with an acyl group derived from a monocarboxylic acid having an alicyclic structure. The above-described acyl group is preferably a linear or branched aliphatic acyl group having 2 to 4 carbon atoms or an alicyclic acyl group having 4 to 12 carbon atoms, more preferably a linear or branched aliphatic acyl group having 2 or 3 carbon atoms or an alicyclic acyl group having 4 to 7 carbon atoms, and still more preferably a linear or branched aliphatic acyl group having 2 carbon atoms or an alicyclic acyl group having 7 carbon atoms.

That is, the above-described monocarboxylic acid is preferably a linear or branched aliphatic monocarboxylic acid having 2 to 4 carbon atoms or a cycloalkyl monocarboxylic acid having 4 to 12 carbon atoms, more preferably a linear or branched aliphatic monocarboxylic acid having 2 or 3 carbon atoms or a cycloalkyl monocarboxylic acid residue having 4 to 7 carbon atoms, and still more preferably an aliphatic monocarboxylic acid residue having 2 carbon atoms or a cycloalkyl monocarboxylic acid residue having 7 carbon atoms.

Examples of the polyester include polyesters described in paragraphs [0024] to [0035] of JP2015-227955A, the content of which is incorporated herein by reference.

The additive A may include an additive A other than the above-described saccharides and the above-described polyester.

Examples of other additives A include an organic acid represented by General Formula (11) and a compound represented by General Formula (21).

$$X^{11}\text{-}L(R^{11})_n \qquad (11)$$

$X^{11}$ represents an acidic group having an acid dissociation constant of 5.5 or less. L represents a single bond or a di- or higher valent linking group. $R^{11}$ represents an alkyl group having 6 to 30 carbon atoms, an alkenyl group having 6 to 30 carbon atoms, an alkynyl group having 6 to 30 carbon atoms, an aryl group having 6 to 30 carbon atoms, or a heterocyclic group having 6 to 30 ring members, each of which may further have a substituent. In a case where L is a single bond, n is 1, and in a case where L is a di- or higher linking group, n is (valence of L - 1). In other words, L is an (n+1)-valent linking group.

The above-described organic acid represented by General Formula (11) is preferably a partial derivative of a polyvalent organic acid. In the present specification, the term "partial derivative of a polyvalent organic acid" refers to a compound having a structure in which one molecule of a fatty acid and a polyvalent organic acid are ester-bonded to one molecule of a polyhydric alcohol, and having at least one unsubstituted acidic group derived from a polyvalent carboxylic acid. In the present specification, the fatty acid means an aliphatic monocarboxylic acid. That is, the fatty acid in the present specification is not limited to a so-called higher fatty acid, and includes a lower fatty acid having 12 or less carbon atoms, such as acetic acid and propionic acid.

The above-described partial derivative of the polyvalent organic acid is preferably a partial derivative of a polyvalent carboxylic acid.

That is, the above-described organic acid represented by General Formula (11) has a structure in which one molecule of a fatty acid and one molecule of a polyvalent carboxylic acid are ester-bonded to one molecule of a polyhydric alcohol, and it is preferable to have at least one unsubstituted carboxyl group derived from the polyvalent carboxylic acid. The polyvalent carboxylic acid used as the above-described partial derivative of the polyvalent carboxylic acid is not particularly limited, and for example, succinic acid, citric acid, tartaric acid, diacetyltartaric acid, malic acid, or adipic acid is preferable.

Examples of the above-described polyhydric alcohol used for the above-described partial derivative of the polyvalent organic acid include adonitol, arabitol, ethylene glycol, diethylene glycol, triethylene glycol, tetraethylene glycol, 1,2-propanediol, 1,3-butanediol, 1,4-butanediol, dibutylene glycol, 1,2,4-butanetriol, 1,5-pentanediol, 1,6-hexanediol, hexanetriol, galactitol, mannitol, 3-methylpentane-1,3,5-triol, pinacol, sorbitol, trimethylolpropane, trimethylolethane, xylitol, and glycerin. Among these, glycerin is preferable, and the above-described organic acid represented by General Formula (11) is preferably a so-called organic acid glyceride.

As the above-described organic acid represented by General Formula (11), an organic acid glyceride in which the acidic group $X^{11}$ of the organic acid is bonded to the hydrophobic part $R^{11}$ through the linking group L including a group derived from glycerin (glycerin fatty acid organic acid ester) is preferable. Here, the organic acid glyceride in the present specification refers to a compound having a structure having an acidic group derived from a polyvalent organic

acid, in which one or two of three hydroxyl groups in glycerin are ester-bonded with a fatty acid, and one or two of the remaining hydroxyl groups are ester-bonded with a polyhydric organic acid. Among these, organic acid monoglyceride or organic acid diglyceride is more preferable, and organic acid monoglyceride is still more preferable. The organic acid monoglyceride in the present specification refers to a compound having a structure having an acidic group derived from a polyvalent organic acid, in which one of three hydroxyl groups in glycerin is ester-bonded with a fatty acid, and one or two of the remaining hydroxyl groups are ester-bonded with a polyhydric organic acid. The organic acid diglyceride in the present specification refers to a compound having a structure having an acidic group derived from a polyvalent organic acid, in which two of three hydroxyl groups in glycerin are ester-bonded with a fatty acid, and one of the remaining hydroxyl groups is ester-bonded with a polyhydric organic acid. Among the above-described organic acid monoglycerides, a compound having a structure having an acidic group derived from a polyvalent organic acid, in which one of three hydroxyl groups in glycerin is ester-bonded with a fatty acid, one of the remaining hydroxyl groups is an unsubstituted hydroxyl group, and one of the remaining hydroxyl groups is ester-bonded with a polyvalent organic acid, is particularly preferable. The hydroxyl group in the above-described organic acid monoglyceride, which is ester-bonded to the fatty acid, is preferably at an asymmetric position (so-called $\alpha$-monoglyceride position), and the hydroxyl group in the above-described organic acid monoglyceride, which is ester-bonded to the polyvalent organic acid, is also preferably at an asymmetric position (so-called $\alpha$-monoglyceride position). That is, among the above-described organic acid monoglycerides, a compound having an unsubstituted hydroxyl group and having a structure in which a carbon atom directly linked to the hydroxyl group ester-bonded to the fatty acid and a carbon atom directly linked to the hydroxyl group ester-bonded to the polyvalent organic acid are not adjacent to each other.

Among the above-described organic acid monoglycerides, a monoglyceride of a polyvalent carboxylic acid is particularly preferable. The above-described monoglyceride of the polyvalent carboxylic acid refers to an organic acid in which at least one of polyvalent carboxylic acids has an unsubstituted carboxyl group and the other carboxyl groups are substituted with monoglycerides. That is, a carboxyl group-containing organic acid monoglyceride in which one molecule of a fatty acid and one molecule of a polyvalent carboxylic acid are bonded to one molecule of glycerin is particularly preferable.

The above-described polyvalent carboxylic acid used in the above-described monoglyceride of the polyvalent carboxylic acid is not particularly limited, and for example, succinic acid, citric acid, tartaric acid, diacetyltartaric acid, malic acid, or adipic acid is preferable.

The above-described fatty acid used in the above-described monoglyceride of the polyvalent carboxylic acid is not particularly limited, but is preferably a saturated or unsaturated fatty acid having 8 to 22 carbon atoms, and more preferably caprylic acid, capric acid, lauric acid, myristic acid, palmitic acid, stearic acid, behenic acid, or oleic acid.

Examples of the organic acid represented by General Formula (11) include organic acids described in paragraphs [0046] to [0049] of JP2015-227955A, the content of which is incorporated herein by reference.

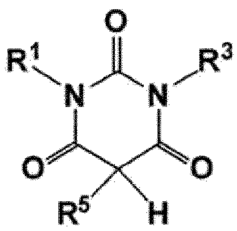

(21)

In General Formula (21), $R^1$, $R^3$, and $R^5$ each independently represent a hydrogen atom, an alkyl group, a cycloalkyl group, an alkenyl group, or an aromatic group. These alkyl group, cycloalkyl group, alkenyl group, and aromatic group may have a substituent. However, any one of $R^1$, $R^3$, or $R^5$ is an alkyl group substituted with a group having a ring structure or a cycloalkyl group, and the total number of ring structures present in $R^1$, $R^3$, and $R^5$ is 3 or more.

The number of carbon atoms in the above-described alkyl group of $R^1$, $R^3$, and $R^5$ is preferably 1 to 20, more preferably 1 to 10, still more preferably 1 to 5, and particularly preferably 1 to 3. As the above-described alkyl group, a methyl group or an ethyl group is preferable.

However, in a case of the alkyl group substituted with a group having a ring structure, the number of carbon atoms thereof is preferably 7 to 20, more preferably 7 to 12, and still more preferably 7 to 10. The ring structure in the alkyl group having a ring structure may be an aromatic ring (including an aromatic heterocyclic ring) or an aliphatic ring, and is preferably an aromatic hydrocarbon group or an aliphatic ring. The number of carbon atoms in the above-described cycloalkyl group of $R^1$, $R^3$, and $R^5$ is preferably 3 to 20, more preferably 3 to 10, still more preferably 4 to 8, and particularly preferably 5 or 6.

Examples of the cycloalkyl group include a cyclopropyl group, a cyclopentyl group, and a cyclohexyl group, and a cyclohexyl group is preferable.

The number of carbon atoms in the above-described alkenyl group of $R^1$, $R^3$, and $R^5$ is preferably 2 to 20, more preferably 2 to 10, and still more preferably 2 to 5. Examples of the above-described alkenyl group include a vinyl group and an allyl group. The above-described aromatic group of $R^1$, $R^3$, and $R^5$ may be an aromatic hydrocarbon group or an aromatic heterocyclic group, but is preferably an aromatic hydrocarbon group. The number of carbon atoms in the aromatic group is preferably 6 to 20, more preferably 6 to 16, and still more preferably 6 to 12. As the aromatic group, in particular, as the aromatic hydrocarbon group, a phenyl group or a naphthyl group is preferable, and a phenyl group is more preferable.

The above-described groups of $R^1$, $R^3$, and $R^5$ may have a substituent. The above-described substituent may be further substituted with a substituent.

The substituent is not particularly limited, and examples thereof include substituents described in paragraphs [0052] and [0053] of JP2015-227955A.

The substituent which may be included in each group of $R^1$, $R^3$, and $R^5$ is preferably an alkyl group, an aryl group, an alkoxy group, an alkylthio group, an alkylsulfonyl group, a halogen atom, or an acyl group, more preferably an alkyl group, an aryl group, an alkoxy group, or an acyl group, and still more preferably an alkyl group or an alkoxy group.

In the compound represented by General Formula (21), any one of $R^1$, $R^3$, or $R^5$ is an alkyl group substituted with a group having a ring structure or a cycloalkyl group, and it is preferable that any one thereof is an alkyl group substituted with a group having a ring structure. Among these, it is preferable that $R^5$ is an alkyl group substituted with a group having a ring structure or a cycloalkyl group. Here, the ring of the group having a ring structure is preferably a benzene ring, a naphthalene ring, a cyclopentane ring, a cyclohexane ring, or a nitrogen-containing heteroaromatic ring (for example, a pyrrole ring, a pyrazole ring, an imidazole ring, an oxazole ring, a thiazole ring, a pyridine ring, an indole ring, or an isoindole ring).

In addition, in the compound represented by General Formula (21), it is preferable that at least two of $R^1$, $R^3$, or $R^5$ are an alkyl group having a ring structure as a substituent or a cycloalkyl group. Furthermore, it is preferable that $R^1$ and $R^3$ each independently represent an alkyl group which may have a substituent, an aromatic group which may have a substituent, or a cycloalkyl group.

In the compound represented by General Formula (21), it is still more preferable that the total number of ring structures present in the substituents of $R^1$, $R^3$, and $R^5$ is 4 or less.

$R^5$ is preferably an alkyl group which may be substituted with a group having a ring structure or an acyl group, or a cycloalkyl group; more preferably an alkyl group substituted with an aryl group, an alkyl group substituted with an acyl group (preferably an alkyl group substituted with an acyl group or an aryl group), or a cycloalkyl group; and still more preferably an alkyl group substituted with an aryl group or a cycloalkyl group. Hereinafter, the above-described alkyl group and cycloalkyl group preferred as $R^5$ will be further described.

Among the alkyl groups, examples of an unsubstituted alkyl group include a methyl group, an ethyl group, a propyl group, an isopropyl group, an n-butyl group, an n-hexyl group, a 2-ethylhexyl group, and an n-octyl group. Examples of the alkyl group substituted with a group having a ring structure include an aralkyl group such as a benzyl group, a phenethyl group, a 3-phenylpropyl group, and a naphthylmethyl group, a pyridin-2-ylmethyl group, a pyridin-3-ylmethyl group, a pyridin-4-ylmethyl group, and an indol-3-ylmethyl group.

As the acyl group in the alkyl group substituted with an acyl group, an alkylcarbonyl group, a cycloalkylcarbonyl group, or an arylcarbonyl group is preferable; a cycloalkylcarbonyl group or an arylcarbonyl group having a ring structure is more preferable; and an arylcarbonyl group is still more preferable.

Examples of the above-described alkylcarbonyl group include an acetyl group, a propionyl group, a butyryl group, and a pivaloyl group.

Examples of the cycloalkylcarbonyl group include a cyclopropylcarbonyl group, a cyclopentylcarbonyl group, and a cyclohexylcarbonyl group.

Examples of the arylcarbonyl group include a benzoyl group, a toluoyl group, and a naphthoyl group.

Examples of the alkyl group substituted with an acyl group include a 2-acylethyl group, a 3-acylpropyl group, and a 2-acylpropyl group, and a 2-acylethyl group is preferable. The alkyl group substituted with an acyl group is preferably an alkyl group substituted with an acyl group and an aryl group, and the aryl group in this case is preferably a phenyl group. Examples of the alkyl group substituted with an acyl group and an aryl group include a 1-phenyl-2-benzoylethyl group and a 1-tolyl-2-benzoylethyl group.

Examples of the cycloalkyl group include the groups exemplified in $R^1$, $R^3$, and $R^5$.

Among the compounds represented by General Formula (21), preferred compounds are as follows.

· Compound in which any one of $R^1$, $R^3$, or $R^5$ is an alkyl group substituted with an aromatic ring

The alkyl group substituted with an aromatic ring is preferably an alkyl group substituted with one or two aryl groups (in a case where two aryl groups are substituted, it is preferable that the two aryl groups are substituted to the same carbon atom). Furthermore, an alkyl group substituted with an aryl group and an acyl group (preferably, with an

aryloyl group) is also preferable.

· Compound in which any one of $R^1$, $R^3$, or $R^5$ is a group including a cycloalkyl group (preferably, a cycloalkyl group)

The ring structure in the above-described case of "the total number of ring structures present in $R^1$, $R^3$, and $R^5$ is 3 or more" include an aspect in which a basic skeleton of the substituent of $R^1$, $R^3$, and $R^5$ itself is a ring structure, and also includes an aspect in which the substituent of $R^1$, $R^3$, and $R^5$ has a ring structure, which is as already exemplified.

As the above-described ring structure, a cyclic saturated hydrocarbon structure or an aromatic ring structure (an aromatic hydrocarbon structure or an aromatic heterocyclic structure) is preferable. In addition, these ring structures may be a fused-ring structure. In a case where the above-described ring structure is a cyclic saturated hydrocarbon structure, it is preferable that this cyclic saturated hydrocarbon structure is present as a cycloalkyl group having 3 to 20 carbon atoms. More specifically, it is more preferable to be present as a cyclopropyl group, a cyclopentyl group, or a cyclohexyl group, and it is still more preferable to be present as a cyclohexyl group. In addition, in a case where the above-described ring structure is an aromatic ring structure, an aromatic hydrocarbon structure is preferable. It is preferable that this aromatic hydrocarbon structure is present as an aryl group having 6 to 20 carbon atoms. More specifically, it is more preferable to be present as a phenyl group or a naphthyl group, and it is still more preferable to be present as a phenyl group. The above-described ring structure may have a substituent, but is preferably unsubstituted. In a case of having a substituent, a preferred range thereof is the same as that of the substituent which may be included in each group of $R^1$, $R^3$, and $R^5$.

In the compound represented by General Formula (21), it is more preferable that $R^1$, $R^3$, and $R^5$ represent an alkyl group, an alkenyl group, or an aryl group. In addition, it is more preferable that $R^1$, $R^3$, and $R^5$ each have one or more ring structures, and it is still more preferable that $R^1$, $R^3$, and $R^5$ each have one ring structure.

Specific examples of the above-described compound represented by General Formula (21) are described below, but the present invention is not limited thereto.

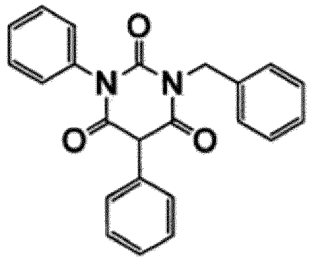

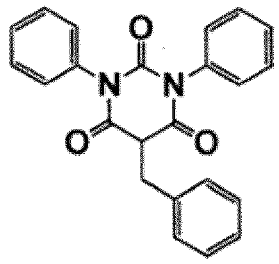

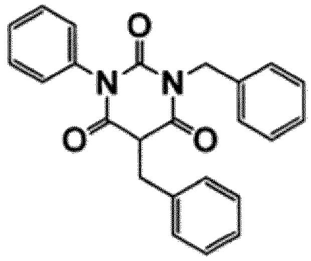

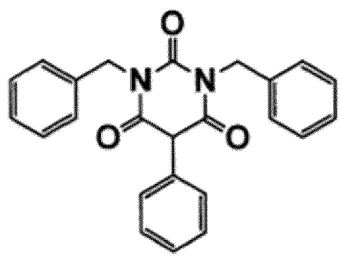

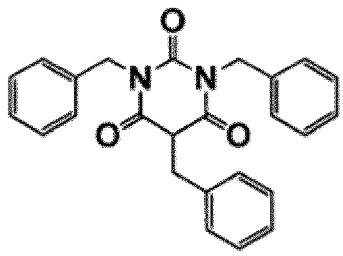

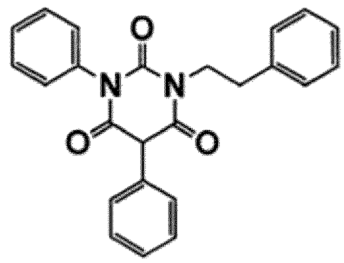

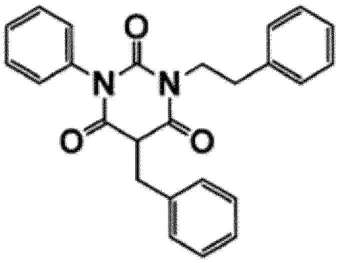

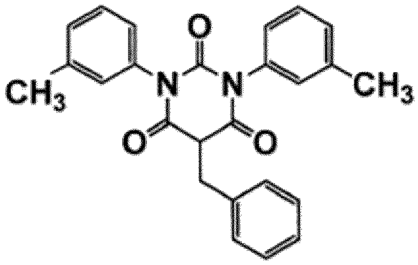

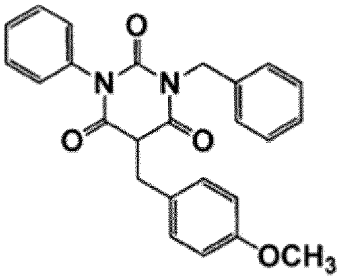

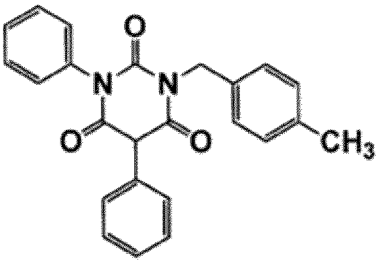

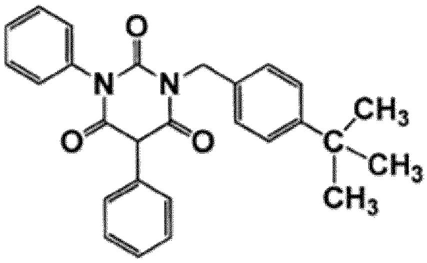

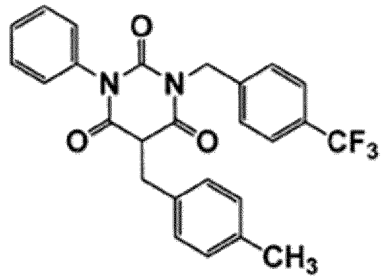

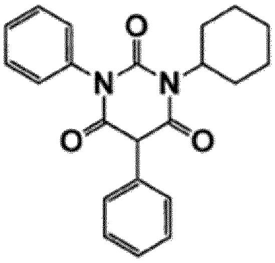

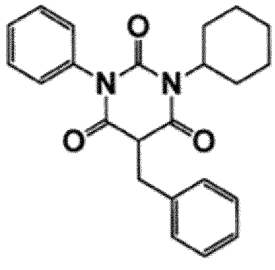

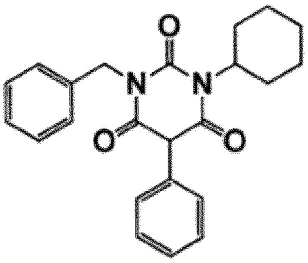

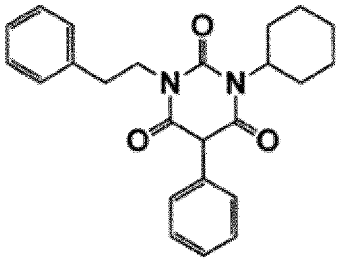

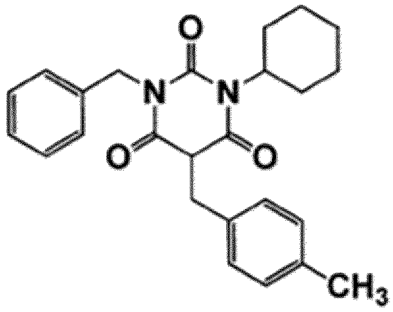

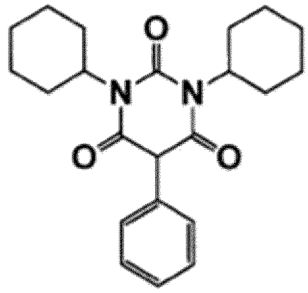

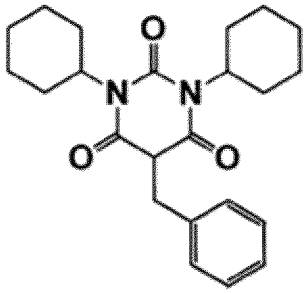

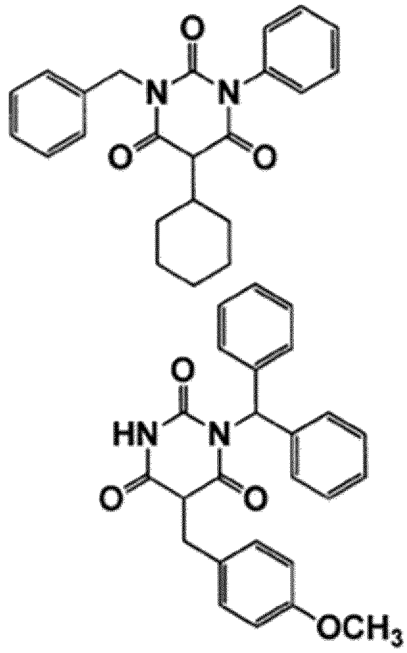

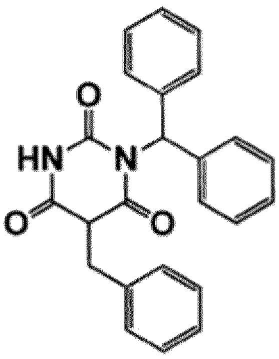

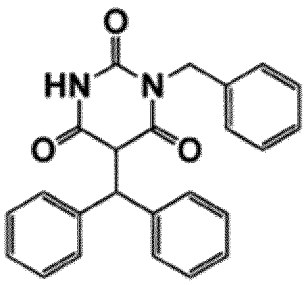

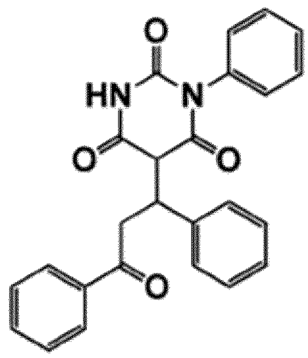

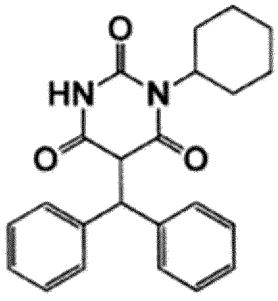

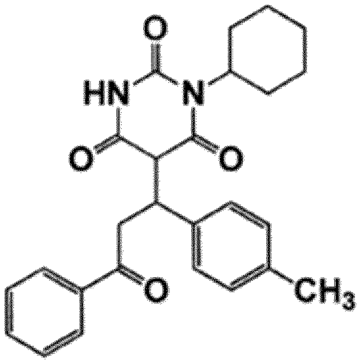

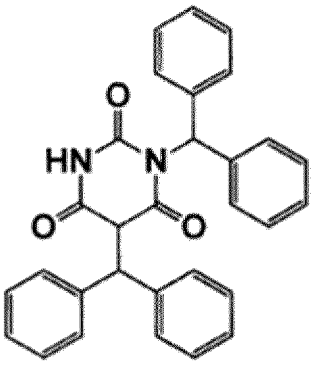

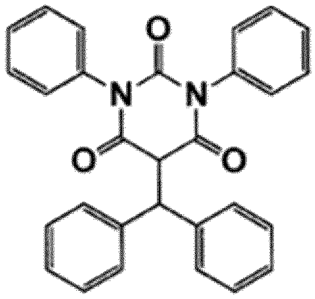

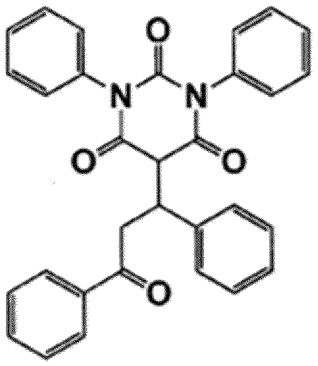

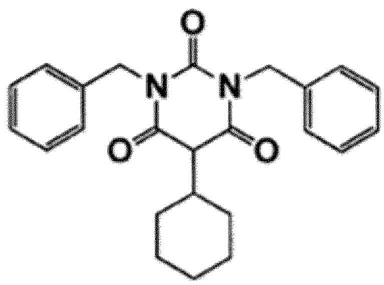

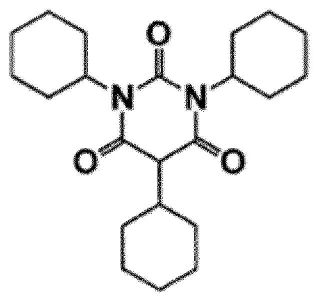

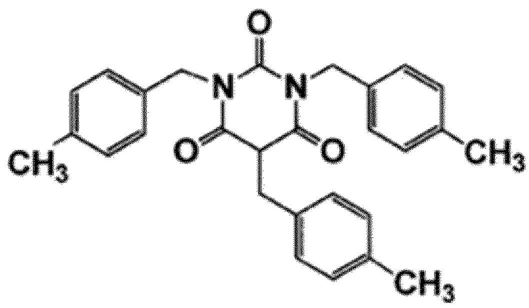

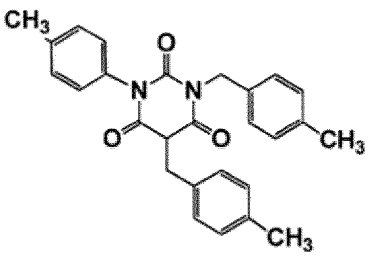

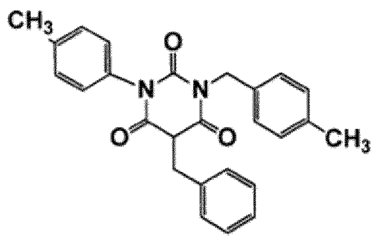

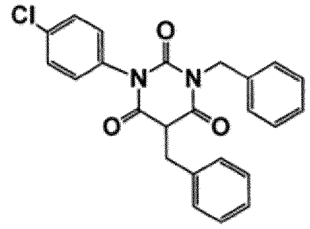

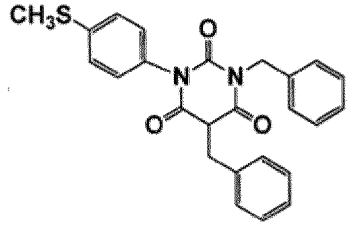

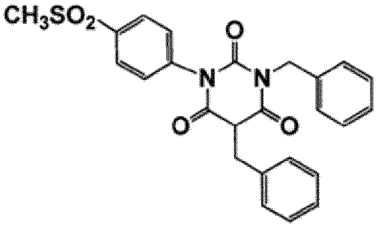

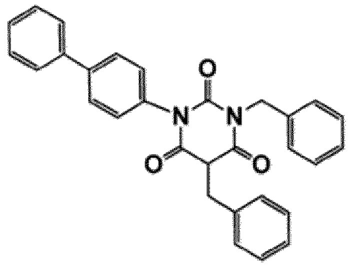

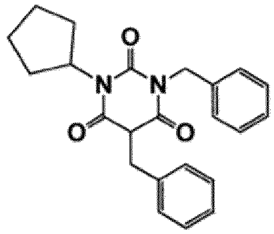

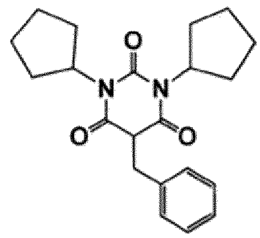

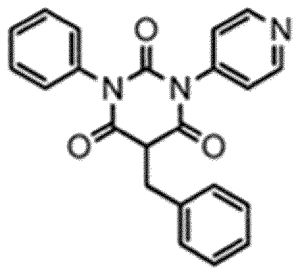

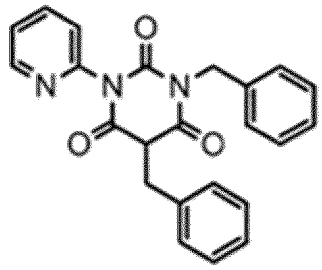

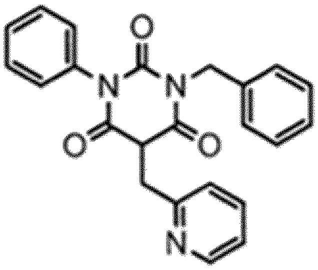

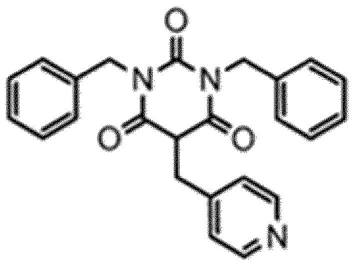

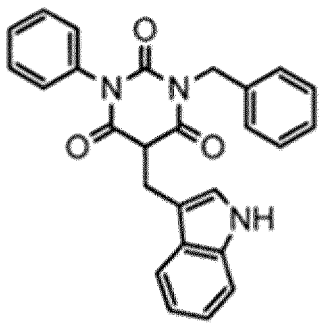

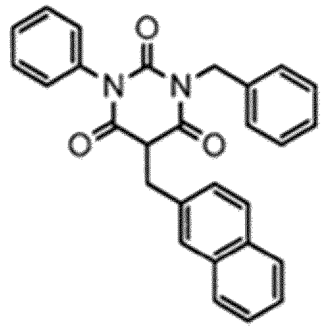

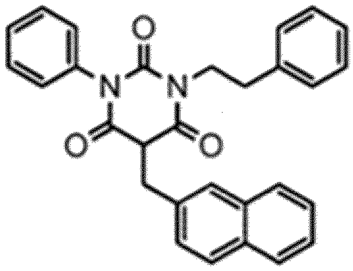

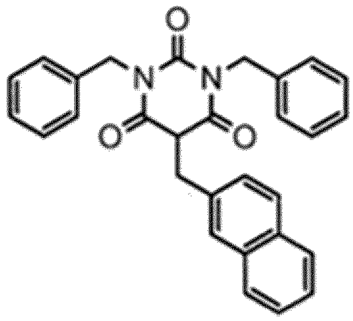

Examples of the compound represented by General Formula (21) and a synthesis method thereof include those described in paragraphs [0072] to [0078] of JP2015-227955A, the content of which is incorporated herein by reference.

A molecular weight of the compound represented by General Formula (21) is preferably 250 to 1,200, more preferably 300 to 800, and still more preferably 350 to 600.

In a case where one kind of the additive A is contained, a ClogP (ClogPA) of the one kind of the additive A is preferably 1.5 to 9.5, more preferably 1.8 to 9.0, and still more preferably 2.1 to 8.5.

In a case where two or kinds of the additives A are contained, an average ClogP (average ClogPA) of the two or more kinds of the additives A is preferably 1.5 to 9.5, more preferably 1.8 to 9.0, and still more preferably 2.1 to 8.5.

The average ClogP of the additives A is a weighted average value of ClogP's, and is calculated by totaling values obtained by multiplying the ClogP of each of the two or more kinds of the additives A by the content of each of the two or more kinds of the additives A with respect to the total mass of the additives A.

More specifically, the average ClogP of the additives A is a value (Y) obtained by Expression 2.

Specifically, in Expression 2, the average ClogP of the additives A is calculated by substituting a ClogP of an i-th (i represents an integer of 1 or more) additive A contained in the AC support into Ci and substituting a mass ratio (content) of the i-th additive A to the total mass of the additives A into Wi.

Expression 2 $$Y = \Sigma CiWi/\Sigma Wi$$

Specifically, in a case where the additive A includes an additive A-X (C1 is a ClogP of 10) as a first additive and an additive A-Y (C2 is a ClogP of 5) as a second additive, and a content (W1) of the additive A-X with respect to the total mass of the additives A is 0.8 and a content (W2) of the additive A-Y with respect to the total mass of the additives A is 0.2, the above-described average ClogP (Y) is calculated as "9" from "$(10 \times 0.8 + 5 \times 0.2)/(0.8 + 0.2) = 9$". The above-described total mass of the additives A corresponds to the total mass of the additive A-X and the additive A-Y.

Examples of a method of deriving the ClogP include derivation by Chemdraw.

The additive A may be used alone or in combination of two or more kinds thereof.

A content of the additive A is preferably 1% to 20% by mass, more preferably 3% to 18% by mass, and still more preferably 5% to 15% by mass with respect to the total mass of the AC support.

[Polymer layer]

The cover film includes a polymer layer containing a polymer.

(Polymer)

Examples of the polymer include known polymers.

The polymer is preferably a polymer which is swollen in an organic solvent used as an enclosing solution in an automatic enclosing device, and more preferably a polymer which is dissolved in the organic solvent. Examples of the organic solvent used in the automatic enclosing device include any single solvent of toluene, xylene, mesitylene (1,3,5-trimethylbenzene), pseudocumene (1,2,4-trimethylbenzene), hemimellitene (1,2,3-trimethylbenzene), durene (1,2,4,5-tetramethylbenzene), ethyl acetate, methyl acetate, acetone, or methyl ethyl ketone; and a mixed solvent of two or more of these solvents. In a case where the polymer is swollen in the organic solvent or is dissolved in the organic solvent, the cover film and the substrate are bonded to each other, and the test subject can be enclosed.

From the viewpoint of excellent solubility in the above-described organic solvent, the polymer is preferably an acrylic resin.

In the present specification, the acrylic resin refers to a polymer which has a repeating unit derived from an acrylate monomer and/or a methacrylate monomer.

The acrylic resin is not particularly limited as long as it has the repeating unit derived from an acrylate monomer and/or a methacrylate monomer, and may be a homopolymer of one monomer selected from the group consisting of an acrylate monomer and a methacrylate monomer or may be a copolymer of two or more monomers selected from the group consisting of an acrylate monomer and a methacrylate monomer. In addition, the acrylic resin may be a copolymer of one or more monomers selected from the group consisting of an acrylate monomer and a methacrylate monomer and one or more monomers other than the acrylate monomer and the methacrylate monomer (for example, an acrylamide monomer, a vinyl monomer, and the like).

In the acrylic resin, a content of the repeating unit derived from an acrylate monomer and/or a methacrylate monomer is preferably 50% by mass or more, more preferably 70% by mass or more, and still more preferably 90% by mass or more with respect to all repeating units of the acrylic resin. The upper limit of the content of the repeating unit derived from an acrylate monomer and/or a methacrylate monomer is not particularly limited, and may be 100% by mass with respect to all repeating units of the acrylic resin.

It is particularly preferable that the acrylic resin includes only the repeating unit derived from an acrylate monomer and/or a methacrylate monomer.

The acrylic resin can be prepared by a known method, and can be prepared, for example, by polymerizing one or more monomers selected from the group consisting of an acrylate monomer and a methacrylate monomer.

Examples of the acrylate monomer and the methacrylate monomer described above include an alkyl acrylate and an alkyl methacrylate.

The alkyl group in the alkyl acrylate and the alkyl methacrylate may further have a substituent. Examples of the above-described substituent include an aryl group, and a phenyl group is preferable. The number of carbon atoms in the alkyl group in the alkyl acrylate and the alkyl methacrylate, which may have a substituent, is preferably 1 to 15, more preferably 1 to 8, still more preferably 1 to 5, and particularly preferably 1 to 3.

Specific examples of the above-described alkyl acrylate include methyl acrylate, ethyl acrylate, n-propyl acrylate, i-propyl acrylate, n-butyl acrylate, i-butyl acrylate, t-butyl acrylate, cyclohexyl acrylate, lauryl acrylate, benzyl acrylate, and acetoacetoxyalkyl acrylate.

Specific examples of the above-described alkyl methacrylate include methyl methacrylate, ethyl methacrylate, n-propyl methacrylate, i-propyl methacrylate, n-butyl methacrylate, i-butyl methacrylate, t-butyl methacrylate, cyclohexyl methacrylate, benzyl methacrylate, lauryl methacrylate, and acetoacetoxyalkyl methacrylate.

Examples of the polymer include polymers including a repeating unit derived from one or more monomers selected from the group consisting of alkyl acrylate, alkyl methacrylate, styrene, and acrylamide.

The alkyl acrylate and the alkyl methacrylate described above have the same definitions as described above.

Specific examples of the monomer include ethyl acrylate, n-butyl acrylate, methyl acrylate, cyclohexyl acrylate, benzyl acrylate, ethyl methacrylate, n-butyl methacrylate, i-butyl methacrylate, t-butyl methacrylate, methyl methacrylate, cyclohexyl methacrylate, benzyl methacrylate, styrene, lauryl methacrylate, lauryl acrylate, acetoacetoxy alkyl methacrylate, acetoacetoxy alkyl acrylate, dimethylacrylamide, and isopropyl acrylamide.

Among these, the polymer preferably includes a repeating unit derived from one or more monomers selected from the group consisting of ethyl acrylate, n-butyl acrylate, methyl acrylate, cyclohexyl acrylate, benzyl acrylate, ethyl methacrylate, n-butyl methacrylate, i-butyl methacrylate, t-butyl methacrylate, methyl methacrylate, cyclohexyl methacrylate, benzyl methacrylate, acetoacetoxyalkyl methacrylate, styrene, and dimethylacrylamide; more preferably includes a repeating unit derived from one or more monomers selected from the group consisting of ethyl acrylate, methyl methacrylate, benzyl acrylate, ethyl methacrylate, n-butyl methacrylate, i-butyl methacrylate, t-butyl methacrylate, and cyclohexyl methacrylate; and still more preferably includes a repeating unit derived from one or more monomers selected from the group consisting of ethyl acrylate and ethyl methacrylate.

A weight-average molecular weight (Mw) of the polymer is preferably 10,000 to 500,000, more preferably 50,000

to 140,000, and still more preferably 60,000 to 120,000.

A content of the polymer is not particularly limited, but is preferably 85% by mass or more and more preferably 90% by mass or more with respect to the total mass of the polymer layer. The upper limit thereof may be 100% by mass or less, and is preferably 99.99% by mass or less and more preferably 99.95% by mass or less.

The polymer may be used singly or in combination of two or more kinds thereof. In a case where two or more kinds of polymers are used, it is preferable that the two or more kinds of polymers are used at a ratio at which turbidity does not occur in a dried film obtained by mixing the two or more kinds of polymers.

(Additive B)

The polymer layer preferably contains an additive B of a kind different from the above-described polymer.

The additive B may be the same as or different from the additive A, and it is preferable that the additive B is different from the additive A.

Examples of the additive B include a carboxylic acid ester, a phosphoric acid ester, a glycol compound, a deep eutectic solvent, and a sulfonic acid ester; and the additive B preferably includes one or more kinds selected from the group consisting of a carboxylic acid ester, a phosphoric acid ester, a glycol compound, and a deep eutectic solvent, and more preferably includes a carboxylic acid ester.

- Carboxylic acid ester -

The carboxylic acid ester is an ester compound generated by a reaction between a carboxy group and a hydroxyl group.

Examples of the carboxylic acid ester include phthalic acid ester, trimellitic acid ester, pyromellitic acid ester, citric acid ester, dipentaerythritol ester, a carboxylic acid ester having an epoxy group, polyether ester, pentaerythritol ester, adipic acid ester, benzoic acid ester, adipic acid polyester, and sebacic acid ester such as dioctyl sebacate.

It is preferable that the additive B includes one or more selected from the group consisting of phthalic acid ester, trimellitic acid ester, pyromellitic acid ester, citric acid ester, dipentaerythritol ester, a carboxylic acid ester having an epoxy group, and polyether ester, and it is more preferable to include phthalic acid ester.

Examples of the phthalic acid ester include diisononyl phthalate, bis(2-ethylhexyl) phthalate, and isodecyl phthalate.

Examples of the trimellitic acid ester include ADK CIZER C series (for example, C-8 and the like; manufactured by ADEKA CORPORATION) and MONOCIZER W-705 (manufactured by DIC Corporation).

Examples of the pyromellitic acid ester include ADK CIZER UL-80 and UL-100 (manufactured by ADEKA CORPORATION).

Examples of the dipentaerythritol ester include ADK CIZER UL-8 (manufactured by ADEKA CORPORATION).

Examples of the carboxylic acid ester having an epoxy group include MONOCIZER W-150 (manufactured by DIC Corporation).

Examples of the adipic acid ester include dioctyl adipate, dibutyl adipate, diisobutyl adipate, ADK CIZER LV-808 (manufactured by ADEKA CORPORATION), and POLYCIZER W-242, W-230-H, W-1020-EL, and W-1430-EL.

Examples of the benzoic acid ester include MONOCIZER PB-3A (manufactured by DIC Corporation).

- Phosphoric acid ester -

Examples of the phosphoric acid ester include t-butylphenyldiphenyl phosphate, tricresyl phosphate, and isopropylphenyldiphenyl phosphate.

- Glycol compound -

Examples of the glycol compound include polyethylene glycol, triethylene glycol bis(2-ethylhexanoate), and diethylene glycol dibenzoate.

- Deep eutectic solvent -

The deep eutectic solvent (DES) is a solvent containing a hydrogen bond acceptor compound and a hydrogen bond donor compound, and is a solvent in which an eutectic melting point is lowered and a melting point is significantly lowered by mixing the hydrogen bond acceptor compound and the hydrogen bond donor compound.

Examples of the hydrogen bond acceptor compound include a quaternary ammonium compound, a phosphorus compound, a metal salt, an amino acid, and a polyvalent carboxylic acid.

Examples of the quaternary ammonium compound include choline chloride, choline acetate, tetra-n-butylammonium chloride, tetramethylammonium chloride, methyltrioctylammonium chloride, tetraoctylammonium chloride, acetylcholine chloride, choline chloride, tetraethylammonium bromide, N-(2-hydroxyethyl)-N,N-dimethylbenzenemethanaminium chloride, fluorocholine bromide, and tetrabutylammonium bromide.

Examples of the phosphorus compound include methyltrifhenylphosphonium bromide, benzyltrifhenylphosphonium chloride, tetrabutylphosphonium bromide, allyltriphenylphosphonium bromide, triethyl phosphate, and triphenyl phosphate.

Examples of the metal salt include zinc (II) chloride, zinc (II) bromide, zirconium (III) chloride, iron (III) chloride, tin (II) chloride, copper (II) chloride, magnesium (II) chloride, sodium nitrate, and potassium carbonate.

Examples of the amino acid include serine, proline, and alanine.

Examples of the polyvalent carboxylic acid include malic acid and citric acid.

Examples of the hydrogen bond donor compound include an alcohol compound, saccharides, a carboxylic acid, and an amine compound.

Examples of the saccharides include the saccharides which can be contained in the additive A described above.

Examples of the alcohol compound include polyhydric alcohol compounds such as ethylene glycol, triethylene glycol, glycerin, pentaerythritol, dipentaerythritol, hexanediol, 1,4-butanediol, glucose, sucrose, xylose, mannitol, sorbitol, xylitol, D-sorbitol, and fructose; and aromatic alcohols such as phenol, cresol, resorcinol, hydroquinone, and phloroglucinol.

Examples of the carboxylic acid include fatty acids such as lactic acid, tartaric acid, malic acid, ascorbic acid, citric acid, adipic acid, malonic acid, oxalic acid, succinic acid, 1,2,3-propanetricarboxylic acid, ribonic acid, itaconic acid, D-isosorbide, threonic acid, formic acid, acetic acid, butanoic acid, pentanoic acid, hexanoic acid, heptanoic acid, octanoic acid, nonanoic acid, decanoic acid, dodecanoic acid, tetradecanoic acid, pentadecanoic acid, hexadecanoic acid, heptadecanoic acid, octadecanoic acid, eicosanoic acid, docosanoic acid, tetracosanoic acid, hexacosanoic acid, octacosanoic acid, and tricontanic acid; aromatic carboxylic acids such as benzoic acid, phenylacetic acid, 3-phenylpropionic acid, 4-hydroxybenzoic acid, caffeic acid, p-coumaric acid, trans-cinnamic acid, and gallic acid; and salts thereof.

Examples of the above-described salts include metal salts including salts of alkali metals such as sodium and potassium and salts of alkaline earth metals such as calcium and magnesium.

Examples of the amine compound include urea, thiourea, 1-methylurea, 1,3-dimethylurea, 1,1-dimethylurea, acetamide, benzamide, 2,2,2-trifluoroacetamide, trifluoromethylurea, imidazole, and benzimidazole.

As a combination of the hydrogen bond acceptor compound and the hydrogen bond donor compound, a combination of choline chloride and urea, a combination of choline chloride and the glycol compound, a combination of choline chloride and the saccharides, a combination of choline acetate and urea, or a combination of tetrabutylammonium chloride and oxalic acid, a halogen compound, or a carboxylic acid is preferable.

Examples of the deep eutectic solvent include solvents described in US2018/0194913A and [0025] to [0048] of JP2020-105336A.

Examples of the additive B include additives described in paragraphs [0036] to [0080] of JP2015-227955A.

The additive B may be used alone or in combination of two or more kinds thereof.

In a case where one kind of the additive B is contained, a molecular weight of the one kind of the additive B is preferably 180 or more and more preferably 200 or more. The upper limit thereof is preferably 800 or less and more preferably 750 or less.

In a case where two or more kinds of the additives B are contained, an average molecular weight of the two or more kinds of the additives B is preferably 180 or more and more preferably 200 or more. The upper limit thereof is preferably 800 or less and more preferably 750 or less.

The average molecular weight of the additives B is a weighted average value of molecular weights, and is calculated by totaling values obtained by multiplying the molecular weight of each of the two or more kinds of the additives B by the content of each of the two or more kinds of the additives B with respect to the total mass of the additives B. More specifically, the average molecular weight is calculated by the same method as that for the average molecular weight of the additive A described above.

In a case where the additive B has a molecular weight distribution, the above-described molecular weight represents a number-average molecular weight, and the above-described average molecular weight is calculated using the number-average molecular weight.

In a case where one kind of the additive B is contained, a ClogP (ClogPB) of the one kind of the additive B is preferably 8.0 to 27.0, more preferably 10.0 to 25.0, and still more preferably 12.0 to 20.0.

In a case where two or kinds of the additives B are contained, an average ClogP (average ClogPB) of the two or more kinds of the additives B is preferably 8.0 to 27.0, more preferably 10.0 to 25.0, and still more preferably 12.0 to 20.0.

The average ClogP of the additives B is a weighted average value of ClogP's, and is calculated by totaling values obtained by multiplying the ClogP of each of the two or more kinds of the additives B by the content of each of the two or more kinds of the additives B with respect to the total mass of the additives B. More specifically, the average

ClogP is calculated by the same method as that for the average ClogP of the additive A described above.

Examples of a method of deriving the ClogP include derivation by Chemdraw.

A content of the additive B is preferably 0.5% by mass or more, more preferably 1% by mass or more, and still more preferably 3% by mass or more with respect to the total mass of the polymer layer.

The upper limit of the content of the above-described additive B is not particularly limited, but from the viewpoint of adhesiveness of the polymer layer, it is preferably 20% by mass or less, more preferably 15% by mass or less, and still more preferably 10% by mass or less with respect to the total mass of the polymer.

(Properties of polymer layer)

- Glass transition temperature -

A glass transition temperature of the polymer layer is not particularly limited, but is preferably 50°C or higher, more preferably 60°C or higher, and still more preferably 65°C or higher. The upper limit thereof is not particularly limited, but is 100°C or lower, preferably 90°C or lower and more preferably 80°C or lower.

The glass transition temperature of the polymer layer is obtained by peeling off the polymer layer from the cover film and heating the polymer layer to -50°C to 100°C under conditions of a temperature rise of 10°C/min using a differential scanning calorimetry (DSC).

The glass transition temperature can be adjusted, for example, by the type of the repeating unit included in the polymer and the content thereof.

- Thickness -

A thickness of the polymer layer is not particularly limited, but is preferably 1 to 100 μm, more preferably 10 to 40 μm, and still more preferably 10 to 30 μm.

- Refractive index -

From the viewpoint of optics during observation with a microscope, a refractive index of the polymer layer is preferably 1.45 to 1.56 that is close to that of glass (refractive index: 1.52 to 1.56), more preferably 1.46 to 1.56, and still more preferably 1.47 to 1.56.

From the viewpoint of easily forming the polymer layer having the above-described refractive index, the polymer constituting the polymer layer preferably includes a repeating unit derived from one or more monomers selected from the group consisting of alkyl acrylate, alkyl methacrylate, and styrene. From the above-described viewpoint, the number of carbon atoms in the alkyl group of the alkyl acrylate and the alkyl methacrylate is preferably 1 to 5 and more preferably 1 to 3.

[Relationship between additive A and additive B]

A relationship between the molecular weight of the additive A and the molecular weight of the additive B is not particularly limited, but a relationship of Expression (X0) is often satisfied, and it is preferable to satisfy a relationship of Expression (X).

$$\text{Expression (X0)} \qquad MwA - MwB \geq -200$$

In a case where the support contains one kind of the additive A, MwA represents the molecular weight of the one kind of the additive A, and in a case where the support contains two or more kinds of the additives A, MwA represents the average molecular weight of the two or more kinds of the additives A.

In a case where the polymer layer contains one kind of the additive B, MwB represents a molecular weight of the one kind of the additive B, and in a case where the polymer layer contains two or more kinds of the additives B, MwB represents an average molecular weight of the two or more kinds of the additives B.

The average molecular weight of the additives A and the average molecular weight of the additives B are values obtained by the above-described method.

$$\text{Expression (X)} \qquad MwA - MwB \geq 120$$

"MwA - MwB" on the left side of Expression (X) is more preferably 200 or more and still more preferably 300 or more. The upper limit thereof is preferably 1,500 or less, more preferably 1,250 or less, and still more preferably 1,000 or less.

A relationship between the ClogP of the additive A and the ClogP of the additive B is not particularly limited, but a relationship of Expression (Y0) is often satisfied, and it is preferable to satisfy a relationship of Expression (Y).

$$\text{Expression (Y0)} \qquad \text{ClogPB - ClogPA} \geq -5.0$$

In a case where the support contains one kind of the additive A, ClogPA represents a ClogP of the one kind of the additive A, and in the case where the support contains two or more kinds of the additives A, ClogPA represents an average ClogP of the two or more kinds of the additives A.

In a case where the polymer layer contains one kind of the additive B, ClogPB represents a ClogP of the one kind of the additive B, and in a case where the polymer layer contains two or more kinds of the additives B, ClogPB represents an average ClogP of the two or more kinds of the additives B.

$$\text{Expression (Y)} \qquad \text{ClogPB - ClogPA} \geq 2.0$$

"ClogPB - ClogPA" on the left side of Expression (Y) is more preferably 3.0 or more and still more preferably 5.7 or more. The upper limit thereof is preferably 25.0 or less, more preferably 22.5 or less, and still more preferably 20.0 or less.

The average ClogP (average ClogPA) of the additives A and the average ClogP (average ClogPB) of the additives B are values obtained by the above-described method.

In a case where the above-described difference between ClogPA and ClogPB is within the above-described range, the additives A and the like in the AC support can suppress the diffusion into the polymer layer, and thus the brittleness of the AC support during storage for a long period of time is unlikely to deteriorate, and breakage is unlikely to occur.

[Other layers]

The cover film may include a layer other than the AC support and the polymer layer.

The cover film may include a silane coupling agent layer on a surface of the polymer layer opposite to the AC support side.

The silane coupling agent layer may contain at least one selected from the group consisting of a silane coupling agent, a hydrolyzate thereof, and a hydrolysis condensate thereof (hereinafter, these are also collectively referred to as "silane coupling agents").

From the viewpoint that blocking is less likely to occur between the polymer layer and a back surface of the AC support (surface of the AC support on a side opposite to the surface on which the polymer layer is formed) even in a case where the cover film according to the embodiment of the present invention is stored in a roll shape, and that storability for a long period of time is more excellent, it is preferable that the cover film according to the embodiment of the present invention includes the silane coupling agent layer.

The type of the silane coupling agent is not particularly limited, but a silane coupling agent which has two or more different reactive groups in a molecule, in which at least one of the reactive groups is a reactive group which is chemically bonded to an inorganic substance and at least one of the reactive groups is a reactive group which is chemically bonded to an organic material, is preferable.

Examples of the silane coupling agent include a silane coupling agent represented by the following general formula.

$$X\text{-}Si(R^1)_3$$

X represents a group having a reactive group. Examples of the reactive group include a vinyl group, an epoxy group, an amino group, a (meth)acryloyl group, and a mercapto group. More specifically, X can be a group represented by $R^2$-L-. $R^2$ represents a reactive group, and L represents a divalent linking group (preferably, alkylene which may include a heteroatom (for example, an oxygen atom)).

$R^1$ represents a hydrolyzable group. The hydrolyzable group is a group which is directly linked to a silicon atom (Si) and can cause a hydrolysis reaction and/or a condensation reaction. Examples of the hydrolyzable group include an alkoxy group, a halogen atom, an acyloxy group, an alkenyloxy group, and an isocyanate group.

As the silane coupling agent, for example, one or more selected from the group consisting of vinyltrichlorosilane, vinyltris(β-methoxyethoxy)silane, vinyltriethoxysilane, vinyl trimethoxysilane, γ-(methacryloxypropyl)trimethoxy silane, β-(3,4-epoxycyclohexyl)ethyltrimethoxysilane, γ-glycidoxypropyltrimethoxysilane, γ-glycidoxypropylmethyldiethoxysilane, N-β-(aminoethyl)-γ-aminopropyltrimethoxysilane, N-β-(aminoethyl)-γ-aminopropyl methyldimethoxysilane, γ-aminopropyl triethoxysilane, N-phenyl-γ-aminopropyltrimethoxysilane, γ-mercaptopropyl trimethoxysilane, and γ-chloropropyl trimethoxysilane are preferable; one or more selected from the group consisting of γ-glycidoxypropyltrimethoxysilane, N-β-(aminoethyl)-γ-aminopropyltrimethoxysilane, and γ-aminopropyl triethoxysilane are more preferable; one or more selected from the group consisting of γ-glycidoxypropyltrimethoxysilane and N-β-(aminoethyl)-γ-aminopropyltrimethoxysilane are still more preferable; and γ-glycidoxypropyltrimethoxysilane is particularly preferable.

The hydrolyzate of the silane coupling agent is intended to be a compound obtained by hydrolyzing the hydrolyzable group in the silane coupling agent. The above-described hydrolyzate may be a compound in which all of the hydrolyzable groups are hydrolyzed (completely hydrolyzed product) or a compound in which some of the hydrolyzable groups are hydrolyzed (partially hydrolyzed product). That is, the above-described hydrolyzate may be the completely hydrolyzed product, the partially hydrolyzed product, or a mixture thereof.

In addition, the hydrolysis condensate of the silane coupling agent is intended to be a compound obtained by hydrolyzing the hydrolyzable group in the silane coupling agent and condensing the obtained hydrolyzate. The above-described hydrolysis condensate may be a compound in which all of the hydrolyzable groups are hydrolyzed and all of the hydrolyzates are condensed (completely hydrolyzed and condensed product) or a compound in which some of the hydrolyzable groups are hydrolyzed and some of the hydrolyzates are condensed (partially hydrolyzed and condensed product). That is, the above-described hydrolysis condensate may be the completely hydrolyzed and condensed product, the partially hydrolyzed and condensed product, or a mixture thereof.

A content of the silane coupling agents in the cover film is preferably 0.1 mg/$m^2$ or more and more preferably 5 to 25 mg/$m^2$ per unit area.

The silane coupling agent may be used alone or in combination of two or more kinds thereof.

Examples of other layers include a backing layer.

In order to prevent scratches on the surface of the cover film, to prevent blocking more reliably during storage in an extremely high temperature environment, or to obtain a curling balance of the cover film, the backing layer may be provided on the back surface of the AC support (surface on a side opposite to the surface on which the polymer layer is provided).

Examples of a constituent material of the backing layer include a synthetic polymer having a high glass transition temperature, such as polystyrene and polymethyl methacrylate, and gelatin.

A total film thickness of the polymer layer and the support in the cover film is not particularly limited, but is preferably 250 μm or less, more preferably 200 μm or less, and still more preferably 150 μm or less from the viewpoint of operability and microscopic properties during observation with a microscope. From the viewpoint of handleability such as breakage resistance and sealing property, the lower limit thereof is preferably 50 μm or more.

<Manufacturing method of cover film>

A method of providing the polymer layer on the AC support is not particularly limited, and examples thereof include coating with a coater or a spray, casting, and transfer. Among these, it is preferable that a coating liquid obtained by dissolving the polymer in a solvent is applied onto the AC support, and then the coating film is dried to form the polymer layer.

As the type of the solvent used in the coating liquid, a solvent in which the polymer is soluble and wettability is exhibited such that cissing on the AC support does not occur is preferably used. Examples of the solvent include toluene, ethyl acetate, butyl acetate, acetone, methyl ethyl ketone, and xylene.

In a case where a material which can dissolve the surface of the AC support or a material which can elute a low-molecular-weight component such as the plasticizer in the AC support is used as the solvent used in the coating liquid, the polymer penetrates the surface layer of the AC support such that the adhesive strength between the polymer layer and the AC support can be improved, and the peeling of the polymer layer can be prevented, and the formation of chips during cutting can be further suppressed.

From the above-described viewpoint, it is preferable that the coating liquid used for forming the polymer layer contains one or more solvents selected from the group consisting of ethyl acetate and butyl acetate, and it is more preferable to contain ethyl acetate.

A content of the solvent selected from the group consisting of ethyl acetate and butyl acetate in the coating liquid is not particularly limited, but from the viewpoint that the formation of chips during cutting of the cover film can be further suppressed, it is preferably 40% by mass or more, more preferably 60% by mass or more, and still more preferably 70% by mass or more with respect to the total mass of solvents contained in the coating liquid. The upper limit thereof is not particularly limited and may be 100% by mass or less, and from the viewpoint of further suppressing deformation

of the substrate, it is preferably 90% by mass or less.

After applying the above-described coating liquid containing the polymer onto the AC support to form a coating film, it is preferable to perform a drying step of drying the coating film to remove the solvent from the coating film.

Examples of the drying treatment in the drying step include a method (for example, natural drying) of leaving the coating film to stand at room temperature (23°C) for a predetermined time, blast drying of blasting gas to the coating film, heating drying of heating the coating film using a heating unit such as an oven, and a combination thereof. In the drying step, it is preferable to perform at least one of the blast drying or the heating drying, and it is more preferable to perform a combination of the blast drying and the heating drying.

A temperature of the gas used in the blast drying is not particularly limited, and is preferably 50°C to 160°C and more preferably 80°C to 140°C. A speed (wind speed) of air flow in the blast drying is not particularly limited, but is preferably 3 to 15 m/s and more preferably 5 to 10 m/s. A treatment time of the blast drying is preferably 0.5 to 5 minutes. Examples of the gas used in the blast drying include air and nitrogen.

A temperature of the heating drying is not particularly limited, but is preferably 50°C to 160°C. In addition, a heating time is preferably 0.5 to 5 minutes.

A method of forming the polymer layer and the silane coupling agent layer is not particularly limited, and examples thereof include a first method of applying a coating liquid obtained by dissolving the silane coupling agents in a solvent onto the surface of the coating film or the polymer layer containing the polymer, formed on the AC support, and drying the coating film; and a second method of simultaneously applying (multilayer application) a coating liquid containing the polymer and a coating liquid obtained by dissolving the silane coupling agents in a solvent onto the transparent support, and drying the coating film.

The solvent of the coating liquid obtained by dissolving the silane coupling agents in the solvent used in the above-described first method and second method is not particularly limited as long as the silane coupling agent can be dissolved, and examples thereof include the solvents exemplified as the solvent capable of dissolving the above-described polymer. Among those, from the viewpoint of further improving the adhesiveness, ethyl acetate is preferable.

<Applications>

The cover film according to the embodiment of the present invention can be suitably used as a cover film used for covering a test subject on a substrate. Among these, the cover film can be preferably used for preparing a specimen for microscopic observation, and can be more preferably applied to a microscope having an automatic enclosing device.

The applications of the cover film according to the embodiment of the present invention are not limited to the above-described applications, and for example, the cover film can be used for applications such as sealing of a thin film on a substrate and protection of an underlayer by lamination. In addition, the substrate bonded to the cover film may be glass or a film-shaped material (resin or the like).

## Examples

Hereinafter, the present invention will be described in more detail with reference to Examples.

The materials, the amounts of materials used, the proportions, the treatment details, the treatment procedure, and the like shown in Examples below may be modified as appropriate as long as the modifications do not depart from the spirit of the present invention. Therefore, the scope of the present invention should not be construed as being limited to Examples shown below.

<Production of cover film>

A cover film was produced by applying each coating liquid containing a polymer onto an AC support. Hereinafter, a detailed procedure will be described.

[Production of AC support]

(Production of core layer cellulose acetate dope)

The following various components were put into a mixing tank and stirred to dissolve the various components, thereby preparing a composition for a core layer cellulose acetate dope.

· Cellulose acetate having acetyl substitution degree of 2.88: 100 parts by mass
· Additive for evaluation shown in tables: 12 parts by mass in Comparative Examples 1 to 3 and Examples 3 and 7; 12 parts by mass/3 parts by mass of polyester A-1/compound A-2 in Examples 1, 2, and 6; 3.5 parts by mass/3.5

parts by mass of compound A-3/compound A-4 in Examples 4, 5, and 8 to 10
· Methylene chloride: 430 parts by mass
· Methanol: 64 parts by mass

- Additive for evaluation -

The additive for evaluation was an additive contained in each AC support, and was a concept including both the additive A and the additive other than the additive A.

· Triphenyl phosphate (molecular weight: 326, ClogP: 4.5)
· Diethyl phthalate (molecular weight: 222, ClogP: 2.6)
· Polyester A-1: condensate of 1,2-cyclohexyldicarboxylic acid and ethylene glycol, having a terminal structure in which hydrogen atoms of hydroxyl groups at both terminals of the polyester are substituted with cyclohexanoyl groups (number-average molecular weight: 913, ClogP: 2.1)
· Compound A-2: compound shown below (molecular weight: 384, ClogP: 5.2)
· Compound A-3: compound shown below (molecular weight: 967, ClogP: 8.9)
· Compound A-4: compound shown below (molecular weight: 847, ClogP: 6.3)

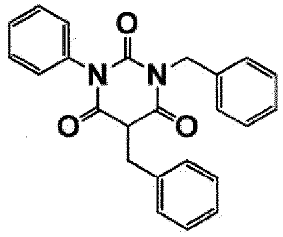

(A-2)

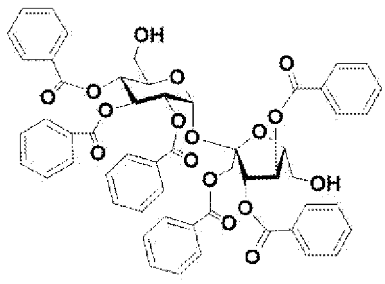

(A-3)

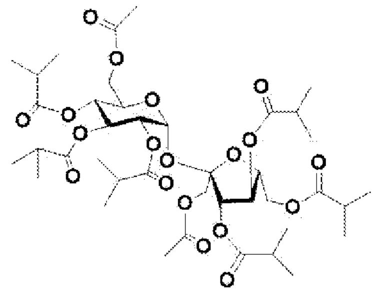

(A-4)

(Production of outer layer cellulose acetate dope)

10 parts by mass of a composition containing the following various components was added to 90 parts by mass of the above-described core layer cellulose acetate dope to prepare a composition for a core layer cellulose acetate dope.

· Silica particles (average particle diameter: 20 nm, AEROSIL R972, manufactured by Nippon Aerosil Co., Ltd.): 2 parts by mass
· Methylene chloride: 76 parts by mass
· Methanol: 11 parts by mass
· Composition for core layer cellulose acetate dope: 1 part by mass

(Production of cellulose acetate film)

Each of the above-described composition for a core layer cellulose acetate dope and the above-described composition for an outer layer cellulose acetate dope were filtered through a filter paper having an average hole diameter of 34 μm and then filtered through a sintered metal filter having an average hole diameter of 10 μm. Thereafter, three layers of a layer of the composition for a core layer cellulose acetate dope after the filtration and two layers of the composition for an outer layer cellulose acetate dope after the filtration, provided on both sides of the layer, were simultaneously cast from a casting port onto a drum at 20°C using a band casting machine. Subsequently, the film was peeled off from a band of the band casting machine, both ends of the film in the width direction were fixed by tenter clips, and the film was dried while being stretched at a stretching ratio of 1.1 times in the lateral direction. Thereafter, the film was further dried by being transported between the rolls of the heat treatment device to produce a cellulose acetate film of Examples and Comparative Examples, having a thickness of 118 μm.

[Preparation of coating liquid for forming polymer layer]

(Coating liquid 1)

First, a polymer A1 was synthesized by the following procedure.

At 80°C in a nitrogen atmosphere, a mixed solution of 90 parts by mass of ethyl acrylate (EA), 210 parts by mass of methyl methacrylate (MMA), 98 parts by mass of toluene, 66 parts by mass of ethyl acetate, and 1.8 parts by mass of azoisobutyronitrile was added to a mixture of 38 parts by mass of toluene and 25 parts by mass of ethyl acetate over 2 hours. Thereafter, the obtained mixed solution was reacted for 2 hours while maintaining the temperature at 80°C. Thereafter, 1.0 part by mass of azoisobutyronitrile was added to the above-described mixed solution, and the mixture was subjected to a polymerization reaction at 90°C such that the weight-average molecular weight was reached 80,000, thereby obtaining a solution containing a polymer A1 (EA/MMA = 3/7 (mass ratio)).

300 parts by mass of toluene and 487 parts by mass of ethyl acetate were added to the obtained solution to obtain a coating liquid 1.

(Coating liquid 2)

First, a polymer A2 was synthesized by the following procedure.

At 80°C in a nitrogen atmosphere, a mixed solution of 90 parts by mass of ethyl acrylate (EA), 210 parts by mass of methyl methacrylate (MMA), 98 parts by mass of toluene, 66 parts by mass of ethyl acetate, and 1.8 parts by mass of azoisobutyronitrile was added to a mixture of 38 parts by mass of toluene and 25 parts by mass of ethyl acetate over 2 hours. Thereafter, the obtained mixed solution was reacted for 2 hours while maintaining the temperature at 80°C. Thereafter, 1.0 part by mass of azoisobutyronitrile was added to the above-described mixed solution, and the mixture was subjected to a polymerization reaction at 90°C such that the weight-average molecular weight was reached 70,000, thereby obtaining a solution containing a polymer A2 (EA/MMA = 3/7 (mass ratio)).

227 parts by weight of toluene, 454 parts by mass of ethyl acetate, and 3 parts by mass of diisononyl phthalate (molecular weight: 419, ClogP: 9.8) as the additive B were added to the obtained solution to obtain a coating liquid 2.

(Coating liquid 3)

First, a polymer A3 was synthesized by the following procedure.

At 80°C in a nitrogen atmosphere, a mixed solution of 60 parts by mass of ethyl acrylate (EA), 180 parts by mass of methyl methacrylate (MMA), 60 parts by mass of ethyl methacrylate (EMA), 98 parts by mass of toluene, 66 parts by mass of ethyl acetate, and 1.8 parts by mass of azoisobutyronitrile was added to a mixture of 38 parts by mass of toluene and 25 parts by mass of ethyl acetate over 2 hours. Thereafter, the obtained mixed solution was reacted for 2 hours while maintaining the temperature at 80°C. Thereafter, 1.0 part by mass of azoisobutyronitrile was added to the above-described mixed solution, and the mixture was subjected to a polymerization reaction at 90°C such that the weight-average molecular weight was reached 100,000, thereby obtaining a solution containing a polymer A3 (EA/MMA/EMA = 2/6/2 (mass ratio)).

111 parts by mass of toluene and 368 parts by mass of ethyl acetate were added to the obtained solution, and then 93 parts by mass of toluene and 59 parts by mass were further mixed with 500 parts by mass of the obtained solution to obtain a coating liquid 3.

(Coating liquid 4)

A coating liquid 4 was obtained by further adding 3 parts by mass of diisononyl phthalate (molecular weight: 419, ClogP: 9.8) to the above-described coating liquid 3.

(Coating liquid 5)

A coating liquid 5 was obtained by further adding 3 parts by mass of ADK CIZER C-8 (molecular weight: 547, ClogP: 12.2, trimellitic acid ester, manufactured by ADEKA CORPORATION) to the above-described coating liquid 1.

(Coating liquid 6)

A coating liquid 6 was obtained in the same procedure as in the coating liquid 2 described above, except that 3 parts by mass of the diisononyl phthalate was changed to 3 parts by mass of ADK CIZER UL-80 (molecular weight: 703, ClogP: 15.3, pyromellitic acid ester, manufactured by ADEKA CORPORATION).

(Coating liquid 7)

A coating liquid 7 was obtained by further adding 3 parts by mass of ADK CIZER UL-6 (molecular weight: 1096, ClogP: 24.3, dipentaerythritol ester, manufactured by ADEKA CORPORATION) to the above-described coating liquid 3.

(Coating liquid 8)

A coating liquid 8 was obtained by further adding 3 parts by mass of MONOCIZER PB-3A (molecular weight: 312, ClogP: 5.1, benzoic acid-based plasticizer, manufactured by DIC Corporation) to the above-described coating liquid 3.

(Coating liquid 9)

First, a polymer A4 was synthesized by the following procedure.

At 80°C in a nitrogen atmosphere, a mixed solution of 75 parts by mass of ethyl acrylate (EA), 150 parts by mass of methyl methacrylate (MMA), 75 parts by mass of ethyl methacrylate (EMA), 98 parts by mass of toluene, 66 parts by mass of ethyl acetate, and 1.8 parts by mass of azoisobutyronitrile was added to a mixture of 38 parts by mass of toluene and 25 parts by mass of ethyl acetate over 2 hours. Thereafter, the obtained mixed solution was reacted for 2 hours while maintaining the temperature at 80°C. Thereafter, 1.0 part by mass of azoisobutyronitrile was added to the above-described mixed solution, and the mixture was subjected to a polymerization reaction at 90°C such that the weight-average molecular weight was reached 100,000, thereby obtaining a solution containing a polymer A4 (EA/MMA/EMA = 25/50/25 (mass ratio)).

111 parts by mass of toluene and 368 parts by mass of ethyl acetate were added to the obtained solution, 93 parts by mass of toluene and 59 parts by mass were further mixed with 500 parts by mass of the obtained solution, and then 3 parts by mass of diisononyl phthalate (molecular weight: 419, ClogP:9.8) was added thereto to obtain a coating liquid 9.

[Coating liquid for forming silane coupling agent layer]

(Coating liquid S)

109.89 parts by mass of ethyl acetate was added to 0.11 parts by mass of a silane coupling agent (γ-glycidoxypropyltrimethoxysilane, KBM-403, manufactured by Shin-Etsu Chemical Co., Ltd.) to obtain a coating liquid S.

[Examples 1 to 9, and 11, and Comparative Examples 1 to 3]

Each coating liquid containing the various components shown in the tables was used for coating the above-described cellulose acetate support by an extrusion coating method, such that a film thickness of solid contents was 19 μm, to form a polymer layer, and then the laminate was dried at 100°C for 5 minutes to produce each cover film of Examples 1 to 9, and 11, and Comparative Examples 1 to 3.

[Example 10]

A cover film of Example 10 was produced by coating the above-described cellulose acetate support with the coating liquid 8 such that a film thickness of solid contents was 19 μm and with the coating liquid S to be 13.5 mg/$m^2$ by an extrusion multilayer coating method to form a polymer layer and a silane coupling agent layer, and drying the laminate at 100°C for 5 minutes.

<Measurement and evaluation method>

[Storage stability]

Each cover film was bonded to a glass substrate using a cover aid automatic enclosing device SCA-Film-J0 (manufactured by SAKURA SEIKI Co., Ltd.) to obtain a bonded body. The obtained bonded body was stored at normal temperature for 1 day and further stored at 80°C for 1 week, and then it was visually checked whether or not the cover film was peeled off from the glass substrate. The storage stability was evaluated according to the following evaluation standard.

A: peeling was not observed.
B: peeling was observed.

[Peeling during film bending]

In a case where each cover film was wound around a cylinder having a diameter of 8 mm or a diameter of 5 mm such that the polymer layer was on the outer side, it was visually confirmed whether or not peeling occurred between the polymer layer and the AC support layer. According to the following evaluation standard, the peeling during film bending was evaluated.

A: no peeling was observed in both the cylinder having a diameter of 8 mm and the cylinder having a diameter of 5 mm.
B: no peeling was observed in the cylinder having a diameter of 8 mm, but peeling was observed in the cylinder having a diameter of 5 mm.

[Breakage of AC support after storage for long period of time]

Each cover film was bonded to a glass substrate using a cover aid automatic enclosing device SCA-Film-J0 (manufactured by SAKURA SEIKI Co., Ltd.) to obtain a bonded body. The obtained bonded body was stored at normal temperature for 1 day and further stored under the conditions shown in each evaluation standard, and then it was confirmed whether or not breakage (cracking) was generated in a case where a surface of the AC support on a side opposite to the glass substrate in the bonded body was observed with an optical microscope (400 times). According to the following evaluation standard, the breakage of the AC support after storage for a long period of time was evaluated.

A: no breakage was observed in both cases where the bonded body was stored at 80°C for 7 days and 10 days.
B: no breakage was observed in a case of being stored at 80°C for 7 days, but breakage was observed in a case of being stored at 80°C for 10 days.

<Result>

The evaluation results are shown in Table 1. Each description in the table is as follows.

The column of "Mw (A)" indicates the molecular weight of the additive for evaluation contained in the AC support. In a case where the AC support contains two or more kinds of the additives for evaluation, it indicates the average molecular weight thereof.

The column of "Mass fraction" of the additive for evaluation indicates the mass fraction of each additive for evaluation in the additives for evaluation (the mass ratio of the mass of each additive for evaluation to the total mass of the additives for evaluation).

The column of "ClogP (A)" indicates ClogP of the additive for evaluation contained in the AC support. In a case where the AC support contains two or more kinds of the additives for evaluation, it indicates the average ClogP thereof.

In the column of "Additive A", a case where the additive for evaluation corresponds to the additive A is indicated by "A", and a case where the additive for evaluation does not correspond to the additive A is indicated by "B".

The column of "Mass fraction" of the additive B indicates the mass fraction of each additive B (the mass ratio of the mass of each additive B to the total mass of the additives B).

The column of "Mw (B)" indicates the molecular weight of the additive B contained in the polymer layer. In a case where the polymer layer contains two or more kinds of the additives B, it indicates the average molecular weight thereof.

The column of "ClogP (B)" indicates ClogP of the additive B contained in the polymer layer. In a case where the polymer layer contains two or more kinds of the additives B, it indicates the average ClogP thereof.

The column of "Mw (A) - Mw (B)" indicates a value obtained by subtracting the Mw (B) from the Mw (A).

The column of "ClogP (B) - ClogP (A)" indicates a value obtained by subtracting the ClogP (A) from the ClogP (B).

| | | | Comparative Example 1 | Comparative Example 2 | Comparative Example 3 | Example 1 | Example 2 | Example 3 | Example 4 |
|---|---|---|---|---|---|---|---|---|---|
| AC support | Additive for evaluation | Type | Triphenyl phosphate | Triphenyl phosphate | Diethyl phthalate | Polyester A-1/compound A-2 | Polyester A-1/compound A-2 | Polyester A-1 | Compound A-3/compound A-4 |
| | | Mass fraction | 1 | 1 | 1 | 0.8/0.2 | 0.8/0.2 | I | 0.5/0.5 |
| | | Mw(A) | 326 | 326 | 222 | 807 | 807 | 913 | 907 |
| | | ClogP(A) | 4.5 | 4.5 | 2.6 | 2.7 | 2.7 | 2.1 | 7.6 |
| | | Additive A | B | B | B | A | A | A | A |
| Polymer layer | Coating liquid | Type | 1 | 2 | 1 | 1 | 3 | 3 | 3 |
| | Polymer | Type | Polymer A1 | Polymer A2 | Polymer A1 | Polymer A1 | Polymer A3 | Polymer A3 | Polymer A3 |
| | Additive B | Type | - | Diisononyl phthalate | - | - | - | - | - |
| | | Mass fraction | - | 1 | - | - | - | - | - |
| | | Mw(B) | - | 419 | - | - | - | - | - |
| | | ClogP(B) | - | 9.8 | - | - | - | - | - |
| Mw(A) - Mw(B) | | | - | -93.0 | - | - | - | - | - |
| ClogP(B) - ClogP(A) | | | - | 5.3 | - | - | - | - | - |
| Evaluation result | Storage stability | | B | B | B | A | A | A | A |
| | Peeling during film bending | | B | B | B | B | B | B | B |
| | Breakage of AC support after storage for long period of time | | B | B | B | B | B | B | B |

| | | | Example 5 | Example 6 | Example 7 | Example 8 | Example 9 | Example 10 | Example 11 |
|---|---|---|---|---|---|---|---|---|---|
| AC support | Additive for evaluation | Type | Compound A-3/compound A-4 | Polyester A-1/compound A-2 | Polyester A-1 | Compound A-3/compound A-4 | Compound A-3/compound A-4 | Compound A-3/compound A-4 | Polyester A-1/compound A-2 |
| | | Mass fraction | 0.5/0.5 | 0.8/0.2 | 1 | 0.5/0.5 | 0.5/0.5 | 0.5/0.5 | 0.8/0.2 |
| | | Mw(A) | 907 | 807 | 913 | 907 | 907 | 907 | 807 |
| | | ClogP(A) | 7.6 | 2.7 | 2.1 | 7.6 | 7.6 | 7.6 | 2.7 |
| | | Additive A | A | A | A | A | A | A | A |
| Polymer layer | Coating liquid | Type | 4 | 4 | 5 | 6 | 7 | 8 | 9 |
| | Polymer | Type | Polymer A3 | Polymer A3 | PolymerA I | Polymer A2 | Polymer A3 | Polymer A 3 | Polymer A4 |
| | Additive B | Type | Diisononyl phthalate | Diisononyl phthadate | ADK CIZER C-8 | ADK CIZER UL-80 | ADK CIZER UL-6 | MONOCIZER PB-3A | Diisononyl phthalate |
| | | Mass fraction | 1 | 1 | 1 | 1 | 1 | 1 | 1 |
| | | Mw(B) | 419 | 419 | 547 | 703 | 1096 | 312 | 419 |
| | | ClogP(B) | 9.8 | 9.8 | 12.2 | 15.3 | 24.3 | 5.1 | 9.8 |
| Mw(A) - Mw(B) | | | 488 | 388 | 366 | 204 | -189 | 595 | 388 |
| ClogP(B) - ClogP(A) | | | 2.2 | 7.1 | 10.1 | 7.7 | 16.7 | -2.5 | 7.1 |
| Evaluation result | Storage stability | | A | A | A | A | A | A | A |
| | Peeling during film bending | | A | A | A | A | B | A | A |
| | Breakage of AC support after storage for long period of time | | B | A | A | A | A | B | A |

From the results shown in the table, it was confirmed that the cover film according to the embodiment of the present invention had excellent storage stability. In addition, since Comparative Examples 1 to 3 did not contain the additive A, it was confirmed that the storage stability was deteriorated.

It was confirmed that, in a case of containing the additive B, at least one of the property of suppressing the peeling during film bending or the property of suppressing the breakage of the AC support after storage for a long period of time was more excellent (Examples 1 to 11).

It was confirmed that, in a case where the relationship of Expression (X) was satisfied, the property of suppressing the peeling during film bending was more excellent (Examples 6 to 9, and 11).

It was confirmed that, in a case where the relationship of Expression (Y) was satisfied, the property of suppressing the breakage of the AC support after storage for a long period of time was more excellent (Examples 5 to 11).

## Claims

1. A cover film comprising:

   a cellulose acetate support; and
   a polymer layer containing a polymer,
   wherein the support contains an additive A other than cellulose acetate, and
   in a case where the support contains one kind of the additive A, a molecular weight of the one kind of the additive A is 500 or more, and in a case where the support contains two or more kinds of the additives A, an average molecular weight of the two or more kinds of the additives A is 500 or more.

2. The cover film according to claim 1,
   wherein the additive A includes one or more selected from the group consisting of saccharides and polyester.

3. The cover film according to claim 1 or 2,
   wherein the polymer layer contains an additive B of a kind different from the polymer.

4. The cover film according to claim 3,

   wherein a relationship of Expression (X) is satisfied,

   $$\text{Expression (X)} \qquad MwA - MwB \geq 120$$

   in the case where the support contains one kind of the additive A, MwA represents the molecular weight of the one kind of the additive A, and in the case where the support contains two or more kinds of the additives A, MwA represents the average molecular weight of the two or more kinds of the additives A, and
   in a case where the polymer layer contains one kind of the additive B, MwB represents a molecular weight of the one kind of the additive B, and in a case where the polymer layer contains two or more kinds of the additives B, MwB represents an average molecular weight of the two or more kinds of the additives B.

5. The cover film according to claim 3,
   wherein the additive B includes one or more selected from the group consisting of a carboxylic acid ester, a phosphoric acid ester, a glycol compound, and a deep eutectic solvent.

6. The cover film according to claim 3,
   wherein the additive B includes one or more selected from the group consisting of phthalic acid ester, trimellitic acid ester, pyromellitic acid ester, citric acid ester, dipentaerythritol ester, a carboxylic acid ester having an epoxy group, and polyether ester.

7. The cover film according to claim 3,
   wherein the additive B includes phthalic acid ester.

8. The cover film according to claim 3,

   wherein a relationship of Expression (Y) is satisfied,

$$\text{Expression (Y)} \qquad \text{ClogPB} - \text{ClogPA} \geq 5.7$$

in the case where the support contains one kind of the additive A, ClogPA represents a ClogP of the one kind of the additive A, and in the case where the support contains two or more kinds of the additives A, ClogPA represents an average ClogP of the two or more kinds of the additives A, and

in a case where the polymer layer contains one kind of the additive B, ClogPB represents a ClogP of the one kind of the additive B, and in a case where the polymer layer contains two or more kinds of the additives B, ClogPB represents an average ClogP of the two or more kinds of the additives B.

**INTERNATIONAL SEARCH REPORT**

International application No. **PCT/JP2022/034797**

**A. CLASSIFICATION OF SUBJECT MATTER**

***B32B 23/08***(2006.01)i; ***C08J 7/04***(2020.01)i
FI: B32B23/08; C08J7/04 Z CEP

According to International Patent Classification (IPC) or to both national classification and IPC

**B. FIELDS SEARCHED**

Minimum documentation searched (classification system followed by classification symbols)

B32B23/08; C08J7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-3506 A (FUJIFILM CORP.) 10 January 2008 (2008-01-10) | 1-8 |
| A | JP 2004-506228 A (3M INNOVATIVE PROPERTIES CO.) 26 February 2004 (2004-02-26) | 1-8 |
| A | JP 11-101943 A (FUJI PHOTO FILM CO., LTD.) 13 April 1999 (1999-04-13) | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 November 2022** | **29 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

## INTERNATIONAL SEARCH REPORT
**Information on patent family members**

International application No.
**PCT/JP2022/034797**

| Patent document cited in search report | Publication date (day/month/year) | Patent family member(s) | Publication date (day/month/year) |
|---|---|---|---|
| JP 2008-3506 A | 10 January 2008 | (Family: none) | |
| JP 2004-506228 A | 26 February 2004 | US 6589650 B1<br>WO 2002/012857 A1 | |
| JP 11-101943 A | 13 April 1999 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008003506 A
- JP 2015227955 A
- US 20180194913 A
- JP 2020105336 A